(19) Europäisches Patentamt
European Patent Office
Office européen des brevets

(11) **EP 4 644 343 A1**

(12) **EUROPEAN PATENT APPLICATION**
published in accordance with Art. 153(4) EPC

(43) Date of publication:
05.11.2025 Bulletin 2025/45

(21) Application number: 23911935.7

(22) Date of filing: 21.12.2023

(51) International Patent Classification (IPC):
$C03C\ 3/091$ (2006.01)     $A61J\ 1/05$ (2006.01)
$C03C\ 3/083$ (2006.01)     $C03C\ 3/085$ (2006.01)
$C03C\ 21/00$ (2006.01)

(52) Cooperative Patent Classification (CPC):
A61J 1/05; B65D 65/00; C03C 3/083; C03C 3/085;
C03C 3/087; C03C 3/091; C03C 21/00

(86) International application number:
PCT/JP2023/045952

(87) International publication number:
WO 2024/143155 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2022 JP 2022209198

(71) Applicant: Nippon Electric Glass Co., Ltd.
Otsu-shi, Shiga 520-8639 (JP)

(72) Inventor: ARAI, Satoshi
Otsu-shi Shiga 520-8639 (JP)

(74) Representative: Henkel & Partner mbB
Patentanwaltskanzlei, Rechtsanwaltskanzlei
Maximiliansplatz 21
80333 München (DE)

(54) **GLASS TUBE AND PHARMACEUTICAL CONTAINER**

(57) The glass tube of the present invention is characterized by containing as the glass composition, in mol%, 60 to 85% $SiO_2$, 1 to 20% $Al_2O_3$, 0 to 5% $B_2O_3$, 1 to 20% $Li_2O+Na_2O+K_2O$, and 0 to 5% $MgO+CaO+SrO+BaO$.

EP 4 644 343 A1

## Description

TECHNICAL FIELD

The present invention relates to a glass tube and a pharmaceutical container having excellent chemical durability and formability. In particular, the present invention relates to a glass tube suitable for use as a pharmaceutical container.

BACKGROUND ART

Rapid advances in pharmaceutical science have led to the development of many kinds of new medicaments, and the medicaments for filling a glass pharmaceutical container are also changing. In the related art, the glass pharmaceutical container is mainly filled with relatively inexpensive medicaments such as blood coagulants and anesthetics, but recently the glass pharmaceutical container has often been filled with preventive drugs such as influenza vaccines, or very expensive medicaments such as anti-cancer drugs.

Breakage of the container filled with such an expensive medicament during the manufacturing step at pharmaceutical companies or at medical facilities results in a huge loss. In particular, in the case where the glass breaks during the manufacturing step, not only is there a large loss in the expensive medicaments, but also a manufacturing loss due to manufacturing line stop is also a problem.

Further, when the glass breaks, there is also an increased risk in terms of safety. In addition to workers and medical professionals involved in manufacturing, there are also self-injectors, which allow patients to administer injection themselves, making the risk caused by glass breakage more serious than ever before.

Generally, the theoretical strength of the glass is very high, but when it is scratched, the strength decreases remarkably. Therefore, it is known that the actual strength of the glass is weaker than the theoretical strength, and a decrease in strength depends on the depth of the scratch. Scratches on pharmaceutical containers such as ampoules, vials, prefilled syringes, and cartridges occur during various processes such as transportation, container processing, inspection, and medicament filling, and are the cause of a decrease in strength of the final product.

As a method for maintaining the strength of the above pharmaceutical containers, it is effective to use a strengthened glass. In particular, it is effective to use, as the strengthened glass, an alkali aluminosilicate glass that has been subjected to an ion exchange treatment (see Patent Literatures 1 to 3 and Non-Patent Literature 1).

CITATION LIST

PATENT LITERATURE

Patent Literature 1: JP2006-83045A
Patent Literature 2: WO2015/031188
Patent Literature 3: WO2013/063275

NON-PATENT LITERATURE

Non Patent Literature 1: Tetsuro Izumitani et al., "New Glass and its Physical Properties", First Edition, Management System Laboratory. Co., Ltd., August 20, 1984, pp. 451-498

SUMMARY OF INVENTION

TECHNICAL PROBLEM

In recent years, rising fossil fuel prices and the need to reduce $CO_2$ emissions have become problems. Glass manufacturing is particularly susceptible to the influences of the rising fuel prices since it is necessary to melt and form glass raw materials at a high temperature. In addition, the melting temperature and the forming temperature are preferably as low as possible in order to reduce the $CO_2$ emissions.

As means for improving the formability of the glass, $B_2O_3$ or an alkali metal oxide has been added to the glass composition in the related art. However, when too much $B_2O_3$ is added, there is a risk that the ion exchange performance decreases. In addition, when too much alkali metal oxide is added, the chemical durability is likely to decrease. Therefore, it is difficult to achieve all of the chemical durability, the ion exchange performance, and the formability at a high level. Note that, in the present description, hydrolytic resistance, acid resistance, and alkali resistance are collectively referred to as chemical durability.

In view of the above circumstances, a technical object of the present invention is to provide a glass tube made of an alkali aluminosilicate glass that achieves all of the chemical durability, the ion exchange performance, and the formability at a high level.

SOLUTION TO PROBLEM

As a result of conducting intensive studies, the inventor of the present invention has found that the above problem can be solved by strictly regulating contents of glass components, and proposes the finding as the present invention. That is, (1) a glass tube according to the present invention contains, as a glass composition, in mol%, from 60% to 85% of $SiO_2$, from 1 % to 20% of $Al_2O_3$, from 0% to 5% of $B_2O_3$, from 1% to 20% of $Li_2O+Na_2O+K_2O$, and from 0% to 5% of $MgO+CaO+SrO+BaO$. Accordingly, it is possible to achieve all of the chemical durability, the ion exchange performance, and the formability at a high level. Here, "$Li_2O+Na_2O+K_2O$" refers to the total content of $Li_2O$, $Na_2O$, and $K_2O$. "$MgO+CaO+SrO+BaO$" refers to the total content of MgO, CaO, SrO, and BaO.

(2) The glass tube according to the present invention is based on the glass tube described in the above (1), in which the content of $Al_2O_3$ is preferably from 1 mol% to 10 mol%. Accordingly, the formability can be improved.

(3) The glass tube according to the present invention is based on the glass tube described in the above (1) or (2), in which a content of MgO is preferably from 0 mol% to 1 mol%, and a content of CaO is preferably from 0 mol% to 0.5 mol%. Accordingly, the chemical durability and the ion exchange performance can be effectively improved.

(4) The glass tube according to the present invention is based on the glass tube described in any one of the above (1) to (3), in which a content of $Li_2O$ is preferably from 0 mol% to 10 mol%, a content of $Na_2O$ is preferably from 0.1 mol% to 15 mol%, and a content of $K_2O$ is preferably from 0 mol% to 5 mol%. Accordingly, the chemical durability, the formability, and the ion exchange performance can be effectively improved.

(5) The glass tube according to the present invention is based on the glass tube described in any one of the above (1) to (4), in which a content of $SnO_2$ is preferably from 0.03 mol% to 3 mol%. Accordingly, the fining property can be improved while preventing coloration of the glass.

(6) The glass tube according to the present invention is based on the glass tube described in any one of the above (1) to (5), in which a content of $TiO_2$ is preferably from 0.001 mol% to 0.5 mol%. Accordingly, the visible light transmittance, the chemical durability, and the formability can be improved.

(7) The glass tube according to the present invention is based on the glass tube described in any one of the above (1) to (6), in which a content of $Fe_2O_3+TiO_2+SnO_2+MoO_3$ is preferably from 0.001 mol% to 1 mol%. Accordingly, the visible light transmittance can be effectively increased.

(8) The glass tube according to the present invention is based on the glass tube described in any one of the above (1) to (7), in which a molar ratio $(Li_2O+Na_2O+K_2O)/Al_2O_3$ is preferably 2 or more. Accordingly, the formability can be improved. Here, "$(Li_2O+Na_2O+K_2O)/Al_2O_3$" refers to a value obtained by dividing the total content of $Li_2O$, $Na_2O$, and $K_2O$ by the content of $Al_2O_3$.

(9) The glass tube according to the present invention is based on the glass tube described in any one of the above (1) to (8), in which a molar ratio $MoO_3/(Fe_2O_3+TiO_2)$ is preferably 0.5 or less, and a visible light transmittance at a thickness of 1 mm is preferably 80% or more. Accordingly, the visible light transmittance can be effectively increased while preventing coloration caused by $MoO_3$. Here, "$MoO_3/(Fe_2O_3+TiO_2)$" indicates a value obtained by dividing the content of $MoO_3$ by the total content of $Fe_2O_3$ and $TiO_2$.

(10) The glass tube according to the present invention is based on the glass tube described in any one of the above (1) to (9), in which a molar ratio $(10\times SnO_2)/(10\times Fe_2O_3+TiO_2+10\times SnO_2+100\times MoO_3)$ is preferably from 0.5 to 1, and the visible light transmittance at a thickness of 1 mm is preferably 85% or more. Accordingly, the visible light transmittance can be increased. Here, "$(10\times SnO_2)/(10\times Fe_2O_3+TiO_2+10\times SnO_2+100\times MoO_3)$" refers to a value obtained by dividing 10 times the content of $SnO_2$ by the total amount of 10 times the content of $Fe_2O_3$, the content of $TiO_2$, 10 times the content of $SnO_2$, and 100 times the content of $MoO_3$.

(11) The glass tube according to the present invention is based on the glass tube described in any one of the above (1) to (10), which is preferably to be subjected to an ion exchange treatment.

(12) The glass tube according to the present invention is based on the glass tube described in any one of the above (1) to (11), which is preferably for use in a pharmaceutical container.

(13) A pharmaceutical container according to the present invention is a pharmaceutical container obtained by processing a glass tube, in which the glass tube is preferably the glass tube described in any one of the above (1) to (12).

(14) The pharmaceutical container according to the present invention is based on the pharmaceutical container described in the above (13), which preferably includes a compression stress layer on a surface.

(15) A pharmaceutical container according to the present invention is a pharmaceutical container including a compression stress layer on a surface, and contains, as a glass composition, in mol%, from 66% to 85% of $SiO_2$, from 1% to 10% of $Al_2O_3$, from 0% to 5% of $B_2O_3$, from 1% to 16.5% of $Li_2O+Na_2O+K_2O$, from 0% to 5% of $MgO+CaO+SrO+BaO$, and from 0.03% to 3% of $SnO_2$, in which a molar ratio $MoO_3/(Fe_2O_3+TiO_2)$ is from 0.0001 to 0.2, and a visible light transmittance at a thickness of 1 mm is 85% or more.

(16)A glass tube according to the present invention contains, as a glass composition, in mol%, from 66% to 85% of $SiO_2$, from 1% to 10% of $Al_2O_3$, from 0% to 5% of $B_2O_3$, from 1% to 16.5% of $Li_2O+Na_2O+K_2O$, from 0% to less than 4% of $MgO+CaO+SrO+BaO$, from 0.001% to 0.5% of $TiO_2$, and from 0.03% to 3% of $SnO_2$, in which a molar ratio $(10\times SnO_2)/(10\times Fe_2O_3+TiO_2+10\times SnO_2+100\times MoO_3)$ is from 0.5 to 1, and a visible light transmittance at a thickness of 1 mm is 85% or more. Accordingly, it is possible to achieve both the chemical durability and the formability at a high level while minimizing coloration of the glass tube. As a result, it is more likely to check for defects in an aqueous-based medicament stored in the pharmaceutical container.

## DESCRIPTION OF EMBODIMENTS

A glass tube according to the present invention contains, as a glass composition, in mol%, from 60% to 85% of $SiO_2$, from 1% to 20% of $Al_2O_3$, from 0% to 5% of $B_2O_3$, from 1% to 20% of $Li_2O+Na_2O+K_2O$, and from 0% to 5% of $MgO+CaO+SrO+BaO$. The reasons for limiting the range of each component are described below. Note that, in the description regarding a content of each component, "%" means "mol%" unless otherwise specified.

$SiO_2$ is one of components that constitute a network structure of the glass. The lower the content of $SiO_2$, the better the formability. However, when the content is too low, the chemical durability is likely to decrease, vitrification is difficult, a thermal expansion coefficient increases, and the thermal shock resistance is likely to decrease. On the other hand, the higher the content of $SiO_2$, the better the chemical durability. However, when the content is too high, the viscosity of the glass increases, the formability is likely to decrease, the liquidus temperature increases, and the glass is likely to devitrify. Therefore, the content of $SiO_2$ is preferably 60% or more, 65% or more, 66% or more, 70% or more, 72% or more, 73% or more, 74% or more, and particularly 75% or more, and is preferably 85% or less, 84% or less, 83% or less, 82.5% or less, 82% or less, 81.5% or less, and particularly 81% or less.

$Al_2O_3$ is one of the components that constitute the network structure of the glass. It also has an effect of improving the chemical durability, and has a high effect of improving the hydrolytic resistance particularly. When the content of $Al_2O_3$ is too low, the hydrolytic resistance is likely to decrease. On the other hand, when the content of $Al_2O_3$ is too high, the viscosity of the glass is likely to increase, devitrified crystals are likely to precipitate in the glass, and it is difficult to form the glass into a tubular shape by using the Danner process or the like. Therefore, the content of $AL_2O_3$ is preferably 1% or more, 2% or more, 2.5% or more, 3% or more, 3.5% or more, 4% or more, 4.5% or more, 4.6% or more, 4.7% or more, 4.8% or more, 4.9% or more, and particularly 5% or more, and is preferably 20% or less, 15% or less, 13% or less, 12% or less, 11% or less, 10% or less, 9.5% or less, 9% or less, 8.5% or less, 8% or less, 7.5% or less, and particularly 7% or less.

$B_2O_3$ has an effect of decreasing the viscosity of the glass, improving the meltability and the formability of the glass, and decreasing the density and the Young's modulus of the glass. However, when the content of $B_2O_3$ is too high, an ion exchange rate (particularly a stress depth) is likely to decrease. In addition, with ion exchange, the glass surface is likely to be colored known as tarnish. In addition, the acid resistance and the alkali resistance are likely to decrease. Therefore, the content of $B_2O_3$ is preferably from 0% to 5%, from 0% to 4%, from 0% to 3%, from 0% to 2%, from 0% to 1%, from 0% to 0.8%, and particularly from 0% to 0.5%.

$Li_2O$, $Na_2O$, and $K_2O$, which are alkali metal oxides ($R_2O$), are one of the components that cut the network structure of the glass, and have an effect of decreasing the viscosity of glass and improving the meltability and the formability of the glass. The content of $Li_2O+Na_2O+K_2O$ is preferably 1% or more, 2% or more, 3 or more, 4% or more, 5% or more, 5.5% or more, 6% or more, 6.5% or more, 7% or more, 7.5% or more, and particularly 8% or more. Note that, in the case of attaching importance to particularly the formability, the content of $Li_2O+Na_2O+K_2O$ is preferably 8.5% or more, 9% or more, 9.5% or more, 10% or more, 10.5% or more, and particularly 11% or more. On the other hand, when the content of $Li_2O+Na_2O+K_2O$ is too high, the chemical durability decreases, or the thermal expansion coefficient increases, decreasing the thermal shock resistance. Therefore, the content of $Li_2O+Na_2O+K_2O$ is preferably 20% or less, 19% or less, 18.5% or less, 18% or less, 17.5% or less, 17% or less, 16.5% or less, 16% or less, 15.5% or less, and particularly 15% or less.

As described above, $Li_2O$ has the effect of decreasing the viscosity of the glass and improving the meltability and the formability of the glass. Among the alkali metal oxides, $Li_2O$ has the greatest effect of decreasing the viscosity of the glass, followed in order by $Na_2O$ and $K_2O$. In addition, it is a component capable of generating a compression stress layer on the glass surface by ion exchange with Na ions or K ions, and is a component that is particularly effective in obtaining a large stress depth. However, when the content of $Li_2O$ is too high, the chemical durability is likely to decrease, and $Li_2O$ is a component that elutes during an ion exchange treatment and that deteriorates an ion exchange solution. A suitable content of $Li_2O$ varies depending on the properties of the glass to be attached importance to. In the case of attaching importance to generating a large compression stress on the glass surface by ion exchange, the content of $Li_2O$ is preferably from 0% to 10%, from 0% to 9%, from 0% to 8%, from 0% to 7%, from 0% to 6%, from 0% to 5%, from 0% to 4%, and particularly from 0% to 3%. In the case of attaching importance to the formability and the chemical durability, the content of $Li_2O$ is preferably from 0.1% to 15%, from 1% to 14.9%, from 2% to 14.8%, from 3% to 14.7%, from 4% to 14.6%, from 5% to 14.5%, from 6% to 14.4%, from 6.5% to 14.3%, from 7% to 14.2%, from 7.5% to 14.1%, and particularly from 8% to 14%. In the case of attaching importance to a balance between the compression stress, the formability, and the chemical durability, the content of $Li_2O$ is preferably from 1% to 14%, from 1.5% to 13%, from 2% to 12%, from 2.5% to 11%, from 2.6% to 10%, from 2.7% to 9.5%, from 2.8% to 9%, from 2.9% to 8.5%, and particularly from 3% to 8%. Note that, when the content of $Li_2O$ is 10% or less, devitrification is less likely to occur.

$Na_2O$ has the effect of decreasing the viscosity of the glass and improving the meltability and the formability of the glass, similar to $Li_2O$. It is also a component that improves the devitrification resistance and the devitrification property due to a reaction with a refractory formed body. Further, when $Na_2O$ is introduced, it is possible to generate a compression stress layer on the glass surface by ion exchange with K ions. When the content of $Na_2O$ is too low, the devitrification resistance is likely to decrease. On the other hand, when the content of $Na_2O$ is too high, the chemical durability is likely to decrease. A suitable content of $Na_2O$ varies depending on the properties of the glass to be attached importance to. In the case of attaching importance to generating a large compression stress on the glass surface by ion exchange, the content of $Na_2O$ is preferably from 0.1% to 15%, from 1% to 14.9%, from 2% to 14.8%, from 3% to 14.7%, from 4% to 14.6%, from 5% to 14.5%, from 6% to 14.4%, from 6.5% to 14.3%, from 7% to 14.2%, from 7.5% to 14.1%, and particularly from 8% to 14%. In the case of attaching importance to the formability and the chemical durability, the content of $Na_2O$ is preferably 0% to 10%, from 0% to 9%, from 0% to 8%, from 0% to 7%, from 0% to 6%, from 0% to 5%, from 0% to 4%, and particularly from 0% to 3%. In the case of attaching importance to the balance between the compression stress, the formability, and the chemical durability, the content of $Na_2O$ is preferably from 1% to 14%, from 1.5% to 13%, from 2% to 12%, from 2.5% to 11%, from 2.6% to 10%, from 2.7% to 9.5%, from 2.8% to 9%, from 2.9% to 8.5%, and particularly from 3% to 8%.

$K_2O$ has the effect of decreasing the viscosity of the glass and improving the meltability and the formability of the glass, although not as effective as $Li_2O$ and $Na_2O$. When the content of $K_2O$ is too low, the devitrification resistance may decrease. On the other hand, when the content of $K_2O$ is too high, the hydrolytic resistance is likely to decrease. In addition, in ion exchange with Na ions or K ions, the compression stress is less likely to generate. Therefore, the content of $K_2O$ is preferably from 0% to 15%, from 0% to 5%, from 0% to 4%, from 0% to 3.5%, from 0% to 3%, from 0% to 2.5%, from 0% to 2%, from 0% to 1.5%, from 0% to 1.3%, from 0% to 1%, and particularly from 0% to less than 1%.

Among the alkali metal oxides ($R_2O$), $Li_2O$ has the greatest effect of decreasing the viscosity of the glass, followed in order by $Na_2O$ and $K_2O$. Therefore, from the viewpoint of decreasing the viscosity of the glass, the relationship of the contents of the alkali metal oxides is preferably $Li_2O \geq Na_2O \geq K_2O$, $Li_2O \geq Na_2O > K_2O$ or $Li_2O > Na_2O \geq K_2O$, and particularly $Li_2O > Na_2O > K_2O$. In addition, when the proportion of $K_2O$ among the alkali metal oxides is too high, it is difficult to achieve both the chemical durability and the formability, and it is difficult to generate a compression stress by ion exchange with Na ions or K ions. Therefore, it is particularly preferable that $Na_2O > K_2O$.

As described above, the alkali metal oxides are components that decrease the viscosity of the glass and at the same time decrease the chemical durability, but are essential components for generating the compression stress in the glass tube by ion exchange. In order to generate the compression stress in the glass tube, larger ions need to be introduced into the glass. Generally, since Na ions and K ions are often used as the ions introduced into the glass by ion exchange, when the content of $K_2O$ in the glass is high, a difference in size of the exchanged ions is small, making it difficult to generate the compression stress. Therefore, from the viewpoint of attaching importance to the ion exchange performance, particularly the generation of the compression stress, the proportion of the content of $K_2O$ in the total content of the alkali metal oxides is preferably small. Therefore, a molar ratio $(Li_2O+Na_2O+K_2O)/(5-K_2O)$ is preferably from -10 to 150, from 0.2 to 150, from 0.2 to 100, from 0.2 to 70, from 0.2 to 50, from 0.2 to 40, from 0.2 to 35, from 0.2 to 32, from 0.2 to 30, from 0.2 to 27, and particularly from 0.2 to 25. Here, "$(Li_2O+Na_2O+K_2O)/(5-K_2O)$" refers to a value obtained by dividing the total content of $Li_2O$, $Na_2O$, and $K_2O$ by a value obtained by subtracting the content of $K_2O$ from 5.

In the case of attaching importance to achieving all of the chemical durability, the formability, and the ion exchange performance, it is preferable to strictly regulate the content of $K_2O$. In this case, a molar ratio $(Li_2O+Na_2O+K_2O)/(1-K_2O)$ is preferably from -30 to 150, from -15 to 150, from 1 to 150, from 1.5 to 100, from 2 to 70, from 2.5 to 50, from 3 to 35, from 3 to 30, from 3.5 to 27, from 4 to 25, from 4.5 to 23, and particularly from 5 to 20. Here. "$(Li_2O+Na_2O+K_2O)/(1-K_2O)$" refers to a value obtained by dividing the total content of $Li_2O$, $Na_2O$, and $K_2O$ by a value obtained by subtracting the content of $K_2O$ from 1 (for example, in the case where the content of $K_2O$ is 0.5 mol%, the value obtained by subtracting the content of $K_2O$ from 1 is 0.5 mol%).

As described above, the alkali metal oxides are components that decrease the viscosity of the glass and at the same time decrease the chemical durability of the glass, and the alkali metal oxides are used to cut the network structure of the glass. However, $Al_2O_3$ forms the network structure of the glass together with the alkali metal oxides in the glass. Therefore, when $Al_2O_3$ is introduced into the glass composition, the role of some of the alkali metal oxides can be changed from cutting the network structure to forming the network structure. Therefore, from the viewpoint of attaching importance to the chemical durability, preferred is a state where all $AL_2O_3$ forms a bond together with the alkali metal oxides in a stoichiometric ratio, and this state occurs when the value of a molar ratio $(Li_2O+Na_2O+K_2O)/Al_2O_3$ is 1 or more. Therefore, the closer the value of the molar ratio $(Li_2O+Na_2O+K_2O)/Al_2O_3$ is to 1, the more the network structure increases, and therefore the better the chemical durability. On the other hand, in this state, the network structure is less broken, and thus the formability decreases. Therefore, from the viewpoint of achieving both the chemical durability and the formability, the molar ratio $(Li_2O+Na_2O+K_2)/Al_2O_3$ is preferably 1 or more, 1.1 or more, 1.2 or more, 1.3 or more, 1.4 or more, 1.5 or more, 1.6 or more, 1.7 or more, 1.8 or more, 1.9 or more, 2 or more, and particularly more than 2. On the other hand, when the molar ratio $(Li_2O+Na_2O+K_2O)/Al_2O_3$ is too large, the formability is improved, but the chemical durability is likely to decrease. Therefore, the molar ratio $(Li_2O+Na_2O+K_2O)/Al_2O_3$ is preferably 5 or less, 4 or less, 3.5 or less, 3.4 or less, 3.3 or less, 3.2 or less, 3.1 or less, and particularly 3 or less.

MgO, CaO, SrO and BaO, which are alkaline earth metal oxides (R'O), are one of the components that cut the network structure of the glass like the alkali metal oxides, and also have the effect of decreasing the viscosity of the glass. They are also components that influence the chemical durability. When a content of MgO+CaO+SrO+BaO is too high, not only the chemical durability is likely to decrease, but also the devitrification resistance is likely to decrease. Therefore, the content of MgO+CaO+SrO+BaO is preferably from 0% to 10%, from 0% to 9%, from 0% to 8%, from 0% to 7%, from 0% to 6%, from 0% to 5%, from 0% to 4%, from 0% to less than 4%, from 0% to 3.9%, from 0% to 3.8%, from 0% to 3.7%, from 0% to 3%, from 0% to 2%, from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, and particularly from 0% to 0.1%.

As described above, MgO, like the alkali metal oxides, is one of the components that cut the network structure of the glass, that decreases the viscosity in high temperature of the glass, and that improves the meltability and the formability of the glass. It is also a component that influences the chemical durability. When the content of MgO is too high, the chemical durability is likely to decrease, the ion exchange performance tends to decrease, and the glass tends to be devitrified. Therefore, the content of MgO is preferably from 0% to 10%, from 0% to 9%, from 0% to 8%, from 0% to 7%, from 0% to 6%, from 0% to 5%, from 0% to 3%, from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, from 0% to 0.1%, from 0% to 0.05%, from 0% to 0.03%, from 0% to less than 0.03%, from 0% to 0.01%, from 0% to less than 0.01%, and particularly from 0% to less than 0.001%.

As described above, CaO, like the alkali metal oxides, is one of the components that cut the network structure of the glass, that decreases the viscosity in high temperature of the glass, and that improves the meltability and the formability of the glass. It is also a component that influences the chemical durability. When the content of CaO is too high, there is a risk that the chemical durability decreases. Further, CaO is a component that is likely to cause a decrease in ion exchange performance and deterioration of the ion exchange solution. Therefore, the content of CaO is preferably from 0% to 10%, from 0% to 9%, from 0% to 8%, from 0% to 7%, from 0% to 6%, from 0% to 5%, from 0% to 4%, from 0% to 3%, from 0% to 2%, from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, from 0% to 0.1%, from 0% to 0.05%, from 0% to 0.03%, from 0% to less than 0.03%, from 0% to 0.01%, from 0% to less than 0.01%, and particularly from 0% to less than 0.001%.

From the viewpoint of attaching importance to the ion exchange performance with Na ions or K ions, it is preferable to strictly regulate the content of $K_2O$, which is likely to reduce the compression stress applied to the glass tube, and the content of CaO, which decreases the ion exchange performance, and it is particularly preferable to strictly regulate the proportion of the alkali metal oxides contributing to ion exchange in the total amount. Therefore, a molar ratio $(K_2O+CaO)/(Li_2O+Na_2O+K_2O)$ is preferably from 0 to 1, from 0 to 0.3, from 0 to 0.25, from 0 to 0.2, from 0 to 0.17, from 0 to 0.15, from 0 to 0.14, from 0 to 0.13, from 0 to 0.12, from 0 to 0.11, and particularly from 0 to 0.1.

A content of SrO is preferably from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, from 0% to 0.1%, from 0% to 0.01%, from 0% to less than 0.01%, and particularly from 0% to 0.001%. When the content of SrO is too high, the chemical durability is likely to decrease.

A content of BaO is preferably from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, from 0% to 0.1%, from 0% to 0.01%, from 0% to less than 0.01%, and particularly from 0% to 0.001%. When the content of BaO is too high, the chemical durability is likely to decrease.

As described above, CaO is a component that decreases the ion exchange performance. In the case of attaching importance to the formation of a compression stress layer by ion exchange, it is preferable to strictly regulate the proportion of CaO in the total amount of the alkaline earth metal oxides. A molar ratio $(MgO+CaO+SrO+BaO)/(1-CaO)$ is preferably from -3 to 10, from 0 to 10, from 0 to 5, from 0 to 4, from 0 to 3.7, from 0 to 3, from 0 to 2, from 0 to 1, from 0 to 0.9, from 0 to 0.8, from 0 to 0.7, from 0 to 0.6, from 0 to 0.5, from 0 to 0.4, from 0 to 0.3, from 0 to 0.2, and particularly from 0 to 0.1. Here, "$(MgO+CaO+SrO+BaO)/(1-CaO)$" refers to a value obtained by dividing the total content of MgO, CaO, SrO, and BaO by a value obtained by subtracting the content of CaO from 1.

A molar ratio $(Li_2O+Na_2O+K_2O+MgO+CaO+SrO+BaO-Al_2O_3)/(SiO_2+Al_2O_3+B_2O_3)$ means the ratio of the component that cuts the network structure in the glass to the component that forms the network structure in the glass. As described above, the alkali metal oxides and the alkaline earth metal oxides have the effect of cutting the network structure in the glass, but since $Al_2O_3$ forms the network structure in the glass together with the alkali metal oxides, an alkali metal oxide in the same amount as the content of $AL_2O_3$ does not have the effect of cutting the network. In addition, $SiO_2$, $Al_2O_3$, and $B_2O_3$ are components that form the network structure in the glass. That is, the smaller the molar ratio $(Li_2O+Na_2O+K_2O+MgO+CaO+SrO+BaO-Al_2O_3)/(SiO_2+Al_2O_3+B_2O_3)$, the fewer the component that cuts the network structure relative to the component that forms the network structure, and therefore the chemical durability, particularly the hydrolytic resistance, is improved. However, when the ratio is too small, the formability is likely to decrease. Therefore, the molar ratio $(Li_2O+Na_2O+K_2O+MgO+CaO+SrO+BaO-Al_2O_3)/(SiO_2+Al_2O_3+B_2O_3)$ is preferably from -0.5 to 0.3, from 0 to 0.2, from 0.01 to 0.19, from 0.02 to 0.018, from 0.03 to 0.17, from 0.04 to 0.16, from 0.041 to 0.159, from 0.042 to 0.158, from 0.043 to 0.157, from 0.044 to 0.156, from 0.045 to 0.155, from 0.046 to 0.154, from 0.047 to 0.153, from 0.048 to 0.152, from 0.049 to 0.151, and particularly from 0.05 to 0.15. Note that, "molar ratio $(Li_2O+Na_2O+K_2O+MgO+CaO+SrO+BaO-Al_2O_3)/(SiO_2+Al_2O_3+B_2O_3)$" refers to a value obtained by dividing a value obtained by subtracting the content of $Al_2O_3$ from the total content of $Li_2O$, $Na_2O$, $K_2O$, $MgO$, $CaO$, $SrO$, and $BaO$ by the total content of $SiO_2$, $Al_2O_3$, and $B_2O_3$.

In the case of attaching importance to both the ion exchange performance and the chemical durability, a molar ratio $((Li_2O+Na_2O+K_2O)/(1-K_2O)+(MgO+CaO+SrO+BaO)/(1-CaO)-Al_2O_3)/(SiO_2+Al_2O_3+B_2O_3)$ means the ratio of component that cuts the network structure in the glass to the component that forms the network structure in the glass, while strictly regulating the component that decreases the ion exchange performance. As described above, the alkali metal oxides and the alkaline earth metal oxides have the effect of cutting the network structure in the glass, but since $Al_2O_3$ forms the network structure in the glass together with the alkali metal oxides, an alkali metal oxide in the same amount as the content of $Al_2O_3$ does not have the effect of cutting the network. In addition, $SiO_2$, $Al_2O_3$, and $B_2O_3$ are components that form the network structure in the glass. That is, the smaller the molar ratio $((Li_2O+Na_2O+K_2O)/(1-K_2O)+(MgO+CaO+SrO+BaO)/(1-CaO)-Al_2O_3)/(SiO_2+Al_2O_3+B_2O_3)$, the fewer the component that cuts the network structure relative to the component that forms the network structure, and therefore the chemical durability, particularly the hydrolytic resistance, is improved. However, when the ratio is too small, the formability is likely to decrease. Therefore, the molar ratio $((Li_2O+Na_2O+K_2O)/(1-K_2O)+(MgO+CaO+SrO+BaO)/(1-CaO)-Al_2O_3)/(SiO_2+Al_2O_3+B_2O_3)$ is preferably from 0 to 0.2, from 0.01 to 0.19, from 0.02 to 0.018, from 0.03 to 0.17, from 0.04 to 0.16, from 0.041 to 0.159, from 0.042 to 0.158, from 0.043 to 0.157, from 0.044 to 0.156, from 0.045 to 0.155, from 0.046 to 0.154, from 0.047 to 0.153, from 0.048 to 0.152, from 0.049 to 0.151, and particularly from 0.05 to 0.15. Note that, in "$((Li_2O+Na_2O+K_2O)/(I-K_2O)+(MgO+CaO+SrO+BaO)/(1-CaO)-Al_2O_3)/(SiO_2+Al_2O_3+B_2O_3)$", the numerator is a value obtained by subtracting the content of $AL_2O_3$ from the total content of $(Li_2O+Na_2O+K_2O)/(1-K_2O)$ and $(MgO+CaO+SrO+BaO)/(1-CaO)$, and the denominator is the total content of $SiO_2$, $Al_2O_3$, and $B_2O_3$.

In addition to the above components, other components may be introduced.

$Fe_2O_3$ is a component that is mixed in as an impurity from glass raw materials or manufacturing equipment. When a content of $Fe_2O_3$ is too high, the glass is colored and the visible light transmittance decreases. Therefore, the content of $Fe_2O_3$ is preferably from 0% to 0.5%, from 0% to 0.3%, from 0% to 0.1%, from 0% to 0.05%, from 0% to 0.04%, from 0% to 0.03%, from 0% to 0.02%, and particularly from 0% to 0.01%.

$TiO_2$ is a component that has the effect of decreasing the viscosity in high temperature and improving the meltability and the formability. It is also a component that improves the chemical durability. In the case of attaching importance to achieving all of the meltability, the formability, and the chemical durability, it is preferable to introduce $TiO_2$. A content of $TiO_2$ is preferably from 0% to 2.3%, from 0% to 1%, from 0.001% to 0.9%, from 0.002% to 0.8%, from 0.003% to 0.7%, from 0.004% to 0.6%, and particularly from 0.005% to 0.5%. On the other hand, $TiO_2$, like $Fe_2O_3$, is a component that can be mixed in as an impurity from glass raw materials or manufacturing equipment. When the content of $TiO_2$ is too high, the glass is black colored and the visible light transmittance decreases. Therefore, in the case of attaching importance to the transmittance, the content of $TiO_2$ is preferably from 0% to 0.5%, from 0% to 0.3%, from 0% to 0.1%, from 0% to 0.05%, from 0% to 0.04%, and particularly from 0% to 0.03%.

In electric melting of the glass, Mo is sometimes used as an electrode material. The electric melting of the glass requires less energy per unit of production than melting using burner burning, making it an effective method of melting the glass to address issues such as rising fossil fuel prices and reduction of $CO_2$ emissions. On the other hand, during the melting, Mo can be mixed as $MoO_3$ into the glass from the electrode surface. When too much $MoO_3$ is mixed into the glass, the glass is black colored and the visible light transmittance decreases. Among the components that may be mixed into the glass from manufacturing equipment, $MoO_3$ is the one that is most likely to color the glass, and therefore a content of $MoO_3$ needs be regulated particularly strictly. Therefore, the content of $MoO_3$ is preferably from 0% to 0.1%, from 0.00001% to 0.03%, from 0.00002% to 0.01%, and particularly from 0.00003% to 0.0005%.

In the case of attaching importance to the transparency of the glass, the amount of $MoO_3$ mixed in needs to be strictly controlled. The influence on transparency is in the order of $MoO_3 > Fe_2O_3 > TiO_2$, and the amount of $MoO_3$ mixed in is preferably less than that of $Fe_2O_3$ and $TiO_2$. Therefore, a molar ratio $MoO_3/(Fe_2O_3+TiO_2)$ is preferably 1 or less, 0.9 or less, 0.8 or less, 0.7 or less, 0.6 or less, 0.5 or less, 0.4 or less, 0.3 or less, 0.2 or less, and particularly from 0.0001 to 0.2.

$ZrO_2$ is a component that improves the alkali resistance. However, when a content of $ZrO_2$ is too high, the viscosity of the glass increases and the devitrification resistance is likely to decrease. Therefore, the content of $ZrO_2$ is

preferably from 0% to 3%, from 0% to 2.5%, from 0% to 2%, from 0% to 1.5%, from 0.1% to 0.8%, and particularly from 0.2% to 0.6%.

$SnO_2$ is a component that acts as a fining agent for a molten glass. In addition, since Sn is used as an electrode in the electric melting of the glass, Sn is a component that can be mixed in as an impurity from the electrode surface. When a content of $SnO_2$ is too low, it takes longer time for bubble removing and there is a risk that the amount of the glass containing bubble defects increases. On the other hand, when the content of $SnO_2$ is too high, the glass is brown colored and the visible light transmittance decreases. Therefore, the content of $SnO_2$ is preferably from 0% to 4%, from 0% to 3%, from 0.001% to 2%, from 0.01% to 1%, from 0.02% to 0.8%, from 0.03% to 0.7%, from 0.04% to 0.6%, from 0.05% to 0.5%, from 0.06% to 0.45%, from 0.07% to 0.4%, from 0.08% to 0.35%, from 0.09% to 0.33%, and particularly from 0.1% to 0.3%.

In the electric melting of the glass, $Fe_2O_3$, $TiO_2$, $SnO_2$, and $MoO_3$ may be contained as components that color the glass. When a total content thereof is low, it is easier to obtain a glass having a higher transmittance. On the other hand, when total content thereof is too low, bubble defects are likely to occur. Therefore, the content of $Fe_2O_3 + TiO_2 + SnO_2 + MoO_3$ is preferably from 0% to 5%, from 0.001% to 4%, from 0.003% to 3.5%, from 0.004% to 3%, from 0.005% to 2.5%, from 0.006% to 2%, from 0.007% to 1.5%, from 0.008% to 1.4%, from 0.009% to 1.3%, from 0.01% to 1.2%, from 0.02% to 1.1%, and particularly from 0.03% to 1%.

In the electric melting of the glass, $Fe_2O_3$, $TiO_2$, $SnO_2$, and $MoO_3$ may be mixed in as components that color the glass. In the case of adding $SnO_2$ as a fining agent, impurities other than $SnO_2$ that influence coloration are preferably contained as few as possible. The influence of these components on the transmittance is $MoO_3 > Fe_2O_3 \approx SnO_2 > TiO_2$. Therefore, from the viewpoint of attaching importance to the transmittance, a molar ratio $(10 \times SnO_2)/(10 \times Fe_2O_3 + TiO_2 + 10 \times SnO_2 + 100 \times MoO_3)$ is preferably from 0.1 to 1, from 0.4 to 1, from 0.5 to 1, from 0.55 to 1, from 0.6 to 1, from 0.65 to 1, from 0.7 to 1, from 0.75 to 1, and particularly from 0.8 to 1.

In addition to $SnO_2$, one or more of F, Cl, $Sb_2O_3$, $SO_3$, etc. may be introduced as a fining agent. A total content and individual content of these fining agents is preferably 5% or less, 3% or less, 1% or less, 0.8% or less, 0.5% or less, 0.3% or less, 0.1% or less, and particularly from 0% to 0.05%.

ZnO is a component that improves the ion exchange performance, and is a component that has a high effect of increasing a compression stress value particularly. It is also a component that decreases the viscosity in high temperature without decreasing the viscosity in low temperature. However, when a content of ZnO is too high, there is a tendency for the hydrolytic resistance to decrease, for the glass to undergo phase separation, for the devitrification resistance to decrease, for the density to increase, or for the stress depth to be small. Therefore, the content of ZnO is preferably from 0% to 4%, from 0% to 1%, and particularly from 0% to 0.01%.

$P_2O_5$ is a component that improves the ion exchange performance while maintaining the compression stress value. It is also a component that reduces the Young's modulus. It is further a component that decreases the viscosity in high temperature and improves the meltability and the formability. However, when a content of $P_2O_5$ is too high, the glass is likely to be clouded due to phase separation and to have a decrease in acid resistance. Therefore, the content of $P_2O_5$ is preferably from 0% to 5%, from 0% to 4%, from 0% to 3.5%, and particularly from 0% to 3%.

In order to improve the chemical durability, the viscosity in high temperature, or the like, $Cr_2O_3$, PbO, $La_2O_3$, $WO_3$, $Nb_2O_5$, $Y_2O_3$, or the like may each be introduced in an amount of 3% or less, 2% or less, 1% or less, less than 1%, and particularly 0.5% or less.

Components such as $H_2$, $CO_2$, CO, $H_2O$, He, Ne, Ar, and $N_2$ may be introduced as impurities up to 0.1% each. An amount of each of the noble metal elements such as Pt, Rh, and Au is preferably 0.05% or less, and further preferably 0.03% or less.

The glass tube according to the present invention preferably has the following properties.

A class in a hydrolytic resistance test (washing with acetone) according to ISO 720 is preferably at least HGA2, and particularly preferably HGA1. Here, the "hydrolytic resistance test (washing with acetone) according to ISO 720" refers to the following test.

(1) A glass sample is ground in an alumina mortar and classified into particles of 300 $\mu$m to 425 $\mu$m using a sieve.
(2) The obtained powder sample is washed with acetone and dried in an oven at 140°C.
(3) The dried powder sample (10 g) is charged into a quartz flask, 50 mL of purified water is added thereto, the flask is closed, and a treatment is performed in an autoclave. The treatment is performed under the following treatment conditions: the temperature is increased from 100°C to 121°C at 1°C/min, then held at 121°C for 30 minutes, and then lowered to 100°C at 0.5°C/min.
(4) After the treatment in an autoclave, the solution in the quartz flask is transferred to another beaker, the inside of the quartz flask is washed three times with 15 mL of purified water, and the washing solutions are also added to the beaker.
(5) A methyl red indicator is added to the beaker and titrated with a 0.02 mol/L hydrochloric acid aqueous solution.
(6) Assuming that 1 mL of the 0.02 mol/L hydrochloric acid aqueous solution corresponds to 620 $\mu$g of $Na_2O$, an alkali elution amount per 1 g of the glass is calculated in terms of $Na_2O$.

Note that, "the class in the hydrolytic resistance test (washing with acetone) according to ISO 720 is at least HGA2" means that the alkali elution amount per 1 g of the glass calculated in terms of $Na_2O$, as determined by the above test, is 527 μg/g or less.

The alkali elution amount in terms of $Na_2O$ in the hydrolytic resistance test (washing with acetone) according to ISO720 is preferably less than 527 μg/g, 200 μg/g or less, 100 μg/g or less, 90 μg/g or less, 80 μg/g or less, 70 μg/g or less, less than 62 μg/g, 60 μg/g or less, 57 μg/g or less, 55 μg/g or less, 53 μg/g or less, and particularly 50 μg/g or less. When the alkali elution amount is too high, the alkali component is elute from the glass, causing minute defects on the surface, making the glass more susceptible to cracking when hit by an object.

The alkali resistance in a test according to ISO 695 is preferably at least class 2. Here. the "alkali resistance test according to ISO 695" refers to the following test.

(1) A sample having a surface area of A cm$^2$ (where A is 10 cm$^2$ to 15 cm$^2$) is prepared, the entire surface of which is mirror-finished. First, as a pretreatment, a solution is prepared by mixing hydrofluoric acid (40 mass%) and hydrochloric acid (2 mol/L) in a volume ratio of 1:9. The sample is immersed in this solution and stirred with a magnetic stirrer for 10 minutes. The sample is taken out and subjected to ultrasonic washing with purified water for 2 minutes three times, and ultrasonic washing with ethanol for 1 minute twice.
(2) Thereafter, the sample is dried in an oven at 110°C for 1 hour and allowed to cool in a desiccator for 30 minutes.
(3) A mass m1 of the sample is measured and recorded with an accuracy of ±0.1 mg.
(4) An 800 mL solution is prepared by mixing a sodium hydroxide aqueous solution (1 mol/L) and a sodium carbonate aqueous solution (0.5 mol/L) in a volume ratio of 1:1. This solution is charged into a stainless steel container and boiled using a mantle heater. Next, a sample suspended from a platinum wire is put into the solution and held for 3 hours, and then the sample is taken out and subjected to ultrasonic washing with purified water for 2 minutes three times and ultrasonic washing with ethanol for 1 minute twice. Thereafter, the sample is dried in an oven at 110°C for 1 hour and allowed to cool in a desiccator for 30 minutes.
(5) A mass m2 of the sample is measured and recorded with an accuracy of ±0.1 mg.
(6) Based on the masses m1 and m2 (mg) before and after putting into the boiling alkaline solution and the surface area A (cm$^2$) of the sample, a mass reduction amount per unit area is calculated using the following equation, and this is used as the measured value in the alkali resistance test.

$$\text{(Mass reduction amount per unit area)} = 100 \times (m1\text{-}m2)/A$$

Note that, "the alkali resistance in the test according to ISO 695 is class 2" means that the mass reduction amount per unit area determined as above is 175 mg/dm$^2$ or less. Note that, when the mass reduction amount per unit area determined as above is 75 mg/dm$^2$ or less, "the alkali resistance in the test according to ISO 695 is class 1". The glass according to the present invention has a mass reduction amount per unit area of preferably 130 mg/dm$^2$ or less, and particularly 75 mg/dm$^2$ or less. When the mass reduction amount is high, the alkali component is elute from the glass, causing minute defects on the surface, making the glass more susceptible to cracking when hit by an object.

In an acid resistance test according to YBB00342004, the mass reduction amount per unit area is preferably 1.5 mg/dm$^2$ or less, and particularly 0.7 mg/dm$^2$ or less. When the mass reduction amount is high, the alkali component is elute from the glass, causing minute defects on the surface, making the glass more susceptible to cracking when hit by an object.

The "acid resistance test according to YBB00342004" refers to the following test.

(1) A sample having a surface area of A cm$^2$ (where A is 100 + 5 cm$^2$) is prepared, the entire surface of which is mirror-finished. First, as a pretreatment, for the sample, a solution is prepared by mixing hydrofluoric acid (40 mass%) and hydrochloric acid (2 mol/L) in a volume ratio of 1:9. The sample is immersed in this solution and stirred with a magnetic stirrer for 10 minutes. The sample is taken out and subjected to ultrasonic washing with purified water for 2 minutes three times, and ultrasonic washing with ethanol for 1 minute twice.
(2) Thereafter, the sample is dried in an oven at 110°C for 1 hour and allowed to cool in a desiccator for 30 minutes.
(3) A mass m1 of the sample is measured and recorded with an accuracy of +0.1 mg.
(4) 800 mL of hydrochloric acid solution (6 mol/L) is prepared. This hydrochloric acid solution is charged into a silica glass container and boiled using an electric heater. A sample suspended from a platinum wire is put into the container and held there for 6 hours. The sample is taken out and subjected to ultrasonic washing with purified water for 2 minutes three times, and ultrasonic washing with ethanol for 1 minute twice. Thereafter, the sample is dried in an oven at 110°C for 1 hour and allowed to cool in a desiccator for 30 minutes.
(5) A mass m2 of the sample is measured and recorded with an accuracy of ±0.1 mg.
(6) Based on the masses m1 and m2 (mg) before and after putting into the boiling acid solution and the surface area A (cm$^2$) of the sample, half of the mass reduction amount per unit area is calculated using the following equation, and this is used as the measured value in the acid resistance test.

$$(\text{Mass reduction amount per unit area}) = 1/2 \times 100 \times (m1\text{-}m2)/A$$

The visible light (wavelength: 380 nm to 760 nm) transmittance at a thickness of 1 mm is preferably 50% or more, 60% or more, 70% or more, 80% or more, 85% or more, 86% or more, 87% or more, 88% or more, 89% or more, and particularly 90% or more. When the visible light transmittance at a thickness of 1 mm is high, the visibility of pharmaceuticals is likely to improve.

A working temperature (temperature at $10^{4.0}$ dPa·s) is preferably 1350°C or lower, 1300°C or lower, 1260°C or lower, and particularly 1250°C or lower. When the working temperature is high, the forming temperature of the molten glass is high, so that the life of the forming equipment is likely to be short.

A temperature at $10^{2.5}$ dPa·s is preferably 1700°C or lower, 1650°C or lower, 1640°C or lower, 1630°C or lower, 1620°C or lower, 1610°C or lower, and particularly 1600°C or lower. The lower the temperature at $10^{2.5}$ dPa·s, the lower the melting temperature, which reduces the burden on glass manufacturing equipment such as a melting kiln and also makes it more likely to reduce the bubble count. Therefore, the lower the temperature at $10^{2.5}$ dPa·s, the more likely it is to reduce the manufacturing cost of the glass tube. On the other hand, when the temperature at $10^{2.5}$ dPa·s is high, there is a risk that the glass is colored due to the mixing of foreign matters or $MoO_3$ or $SnO_2$ that has been mixed in from the electrode.

A liquidus viscosity is preferably 4.0 dPa·s or more, 4.3 dPa·s or more, 4.5 dPa·s or more, 4.8 dPa·s or more, 5.1 dPa·s or more, 5.3 dPa·s or more, and particularly 5.5 dPa·s or more, in terms of Log $\rho$. When the liquidus viscosity is too low, the devitrification resistance decreases, and it is difficult to form a glass tube by using the Danner process or the like.

In order for the glass to have sufficient thermal shock resistance, a linear thermal expansion coefficient is preferably $80 \times 10^{-7}/°C$ or less, and particularly from $30 \times 10^{-7}/°C$ to $65 \times 10^{-7}/°C$, in a temperature range of 20°C to 300°C. When the linear thermal expansion coefficient is outside the above range, the thermal shock resistance is likely to decrease.

The Young's modulus is preferably 60 GPa or more, 65 GPa or more, and particularly 70 GPa or more. When the Young's modulus is too small, the thermal shock resistance is likely to decrease. Note that, the Young's modulus is not particularly limited in upper limit, and is practically 300 GPa or less.

A strengthened glass tube according to the present invention is obtained by subjecting a glass tube for strengthening to an ion exchange treatment, and includes a compression stress layer on the surface. The compression stress value on the outermost surface is preferably 100 MPa or more, 200 MPa or more, 400 MPa or more, 500 MPa or more, 600 MPa or more, and particularly 700 MPa or more. The larger the compression stress value on the outermost surface, the more likely it is to prevent breakage caused by a tensile stress generated in the strengthened glass tube when a foldable display is bent. On the other hand, when an extremely large compression stress is generated on the surface, the tensile stress inherent in the strengthened glass tube is extremely high, and there is a risk that a dimensional change before and after the ion exchange treatment is large. Therefore, the compression stress value on the outermost surface is preferably 1300 MPa or less, 1100 MPa or less, 900 MPa or less, and particularly 800 MPa or less.

A compression stress depth is preferably 1 μm or more, 3 μm or more, 5 μm or more, 7 μm or more, 8 μm or more, 9 μm or more, and particularly 10 μm or more, and is from 5% to 30%, from 6% to 25%, from 7% to 20%, from 8% to 17%, from 10% to 15%, from 11% to 14%, and particularly from 12% to 13% of the thickness. The larger the stress depth, the less likely the strengthened glass tube is to crack even when the strengthened glass tube is deeply scratched, and the smaller the variation in mechanical strength. On the other hand, the larger the stress depth, the larger the dimensional change before and after the ion exchange treatment. Therefore, the stress depth is preferably 20 μm or less, 15 μm or less, and particularly 10 μm or less.

An internal tensile stress value of the strengthened glass tube is preferably 400 MPa or less, 350 MPa or less, 300 MPa or less, 250 MPa or less, 220 MPa or less, 200 MPa or less, 180 MPa or less, and particularly 170 PMa or less. When the internal tensile stress value is too large, the strengthened glass tube is likely to undergo self destruction due to physical impact or the like. On the other hand, when the internal tensile stress value is too small, it is difficult to ensure the mechanical strength of the strengthened glass tube. The internal tensile stress value is preferably 60 MPa or more, 80 MPa or more, 100 MPa or more, 125 MPa or more, 140 MPa or more, and particularly 150 MPa or more. Note that, the internal tensile stress value can be calculated using the following equation 2.

Internal tensile stress value = (compression stress value on outermost surface × stress depth)/(thickness - 2 × stress depth)    equation 2

The glass tube and strengthened glass tube according to the present invention can be prepared as follows. First, glass raw materials mixed to obtain a desired glass composition are charged into a continuous melting furnace and heated and melted at 1500°C to 1700°C, and after fining, the molten glass is supplied to a forming apparatus and formed into a tube shape, followed by cooling. After forming into a tube shape, a well-known method can be adopted as a method of cutting the glass into a predetermined dimension.

In forming the molten glass, it is preferable to cool the molten glass in the temperature range between the annealing point and the strain point at a cooling rate of 2°C/min or more and less than 2500°C/min. The cooling rate is preferably 5°C/min or more, 10°C/min or more, 40°C/min or more, 60°C/min or more, and particularly 100°C/min or more, and is preferably less than 2500°C/min, less than 2000°C/min, less than 1800°C/min, less than 1500°C/min, less than 1300°C/min, less than 1000°C/min, less than 800°C/min, and particularly less than 500°C/min. When the cooling rate is too slow, it is difficult to reduce the thickness. On the other hand, when the cooling rate is too fast, the glass structure becomes coarse, and the hardness of the glass tube is likely to decrease.

Note that, the glass tube according to the present invention has good devitrification resistance and formability, and can thus be formed by using a forming method such as the Danner process or the Vello process. The glass tube obtained by such a forming method can be processed into a container shape by heating and forming. Alternatively, the container may be formed directly from a molten glass by using a forming method such as blowing. The containers formed by these methods are suitable as storage containers for beverages and cosmetics, and also suitable as pharmaceutical containers for oral and parenteral pharmaceuticals.

The strengthened glass tube according to the present invention is prepared by subjecting a glass tube for strengthening to an ion exchange treatment. Conditions for the ion exchange treatment are not particularly limited, and optimum conditions may be selected in consideration of the viscosity properties, the application, the thickness, the internal tensile stress, the dimensional change, or the like of the glass. In particular, when K ions in a $KNO_3$ molten salt are exchanged with the Na component in the glass, a compression stress layer can be efficiently formed on the surface.

The number of times the ion exchange treatment is performed is not particularly limited, and the treatment may be performed once or a plurality of times. When the number of the ion exchange treatment is one, the cost of the strengthened glass tube can be reduced. In the case of performing the ion exchange treatment a plurality of times, the number of times of the ion exchange treatment is preferably two. In this way, the total amount of the tensile stress accumulated inside the glass can be reduced while increasing the stress depth.

The glass tube for strengthening and the strengthened glass tube according to the present invention may be etched with an acidic solution such as hydrofluoric acid or a basic solution such as sodium hydroxide, and in particular edges may be etched. When the etching treatment is performed before the ion exchange treatment, the thickness can be reduced and a decrease in strength due to scratches can be prevented. When the etching treatment is performed after the ion exchange treatment, the influence of scratches, surface roughness, or the like, generated during the ion exchange treatment can be reduced.

The glass tube according to the present invention can have a coating on the outer surface. The coating may be made of any material selected from inorganic coatings and organic coatings such as fluorine, silicone, a surfactant, or the like.

A pharmaceutical container such as ampoules and vials obtained using the glass tube can also have a coating on an inner surface and/or an outer surface. The coating may be made of any material selected from inorganic coatings and organic coatings such as fluorine, silicone, a surfactant, or the like.

EXAMPLES

Hereinafter, the present invention will be described based on Examples. Note that, the following Examples are merely illustrative. The present invention is not limited to the following Examples in any way.

Tables 1 to 10 show Examples of the present invention (Sample Nos. 1 to 120). In the tables, $R_2O/Al_2O_3$ means $(Li_2O+Na_2O+K_2O)/Al_2O_3$. $R_2O/(5-K_2O)$ means the molar ratio $(Li_2O+Na_2O+K_2O)/(5-K_2O)$. $R_2O/(1-K_2O)$ means the molar ratio $(Li_2O+Na_2O+K_2O)/(1-K_2O)$. $R'O/(1-CaO)$ means the molar ratio $(MgO+CaO+SrO+BaO/(1-CaO)$. $(K_2O+CaO)/R_2O$ means the molar ratio $(K_2O+CaO)/(Li_2O+Na_2O+K_2O)$. $10SnO_2/(10Fe_2O_3+TiO_2+10SnO_2+100MoO_3)$ means the molar ratio $(10{\times}SnO_2)/(10{\times}Fe_2O_3+TiO_2+10{\times}SnO_2+100{\times}MoO_3)$. $(R_2O+R'O-Al_2O_3)/(SiO_2+Al_2O_3+B_2O_3)$ means the molar ratio $(Li_2O+Na_2O+K_2O+MgO+CaO+SrO+BaO-Al_2O_3)/(SiO_2+Al_2O_3+B_2O_3)$. $((R_2O/(1-K_2O))+(R'O/(1-CaO))-Al_2O_3)/(SiO_2+Al_2O_3+B_2O_3)$ means the molar ratio $((Li_2O+Na_2O+K_2O)/(1-K_2O)+(MgO+CaO+SrO+BaO)/(1-CaO)-Al_2O_3)/(SiO_2+Al_2O_3+B_2O_3)$.

Table 1

| [mol%] | No. 1 | No. 2 | No. 3 | No. 4 | No. 5 | No. 6 |
|---|---|---|---|---|---|---|
| $SiO_2$ | 79.8 | 79.8 | 79.7 | 79.7 | 79.7 | 79.8 |
| $Al_2O_3$ | 6.5 | 6.5 | 6.5 | 6.5 | 6.5 | 6.5 |
| $B_2O_3$ | 0.0 | 0.0 | 0.0 | 0.0 | 0.0 | 0.0 |
| $Li_2O$ | 13.5 | 0.0 | 6.8 | 6.8 | 0.0 | 4.5 |
| $Na_2O$ | 0.0 | 0.0 | 6.8 | 0.0 | 6.8 | 4.5 |
| $K_2O$ | 0.0 | 13.5 | 0.0 | 6.8 | 6.8 | 4.5 |
| $MgO$ | 0.0 | 0.0 | 0.0 | 0.0 | 0.0 | 0.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.20 | 0.20 | 0.20 | 0.20 | 0.20 | 0.20 |
| $Fe_2O_3$ | 0.008 | 0.007 | 0.008 | 0.008 | 0.008 | 0.007 |
| $TiO_2$ | 0.007 | 0.007 | 0.007 | 0.007 | 0.005 | 0.007 |
| $MoO_3$ | 0.00001 | 0.00004 | 0.00013 | 0.00022 | 0.00044 | 0.00100 |
| $Cl$ | 0.004 | 0.004 | 0.004 | 0.003 | 0.004 | 0.004 |
| $Li_2O+Na_2O+K_2O\ (=R_2O)$ | 13.5 | 13.5 | 13.6 | 13.6 | 13.6 | 13.5 |
| $MgO+CaO+SrO+BaO\ (=R'O)$ | 0.0 | 0.0 | 0.0 | 0.0 | 0.0 | 0.0 |
| $SnO_2+Fe_2O_3+TiO_2+MoO_3$ | 0.22 | 0.21 | 0.22 | 0.22 | 0.21 | 0.22 |
| $R_2O/Al_2O_3$ | 2.077 | 2.077 | 2.092 | 2.092 | 2.092 | 2.077 |
| $R_2O/(5-K_2O)$ | 2.700 | -1.588 | 2.720 | -7.556 | -7.556 | 27.000 |
| $R_2O/(1-K_2O)$ | 13.500 | -1.080 | 13.600 | -2.345 | -2.345 | -3.857 |
| $R'O/(1-CaO)$ | 0.000 | 0.000 | 0.000 | 0.000 | 0.000 | 0.000 |
| $(K_2O+CaO)/R_2O$ | 0.000 | 1.000 | 0.000 | 0.500 | 0.500 | 0.333 |
| $MoO_3/(Fe_2O_3+TiO_2)$ | 0.0007 | 0.0029 | 0.0087 | 0.0147 | 0.0338 | 0.0714 |
| $10SnO_2/(10Fe_2O_3+TiO_2+10SnO_2+100MoO_3)$ | 0.96 | 0.96 | 0.95 | 0.95 | 0.94 | 0.92 |

(continued)

| [mol%] | No. 1 | No. 2 | No. 3 | No. 4 | No. 5 | No. 6 |
|---|---|---|---|---|---|---|
| $(R_2O+R'O-Al_2O_3)/(SiO_2+Al_2O_3+B_2O_3)$ | 0.081 | 0.081 | 0.082 | 0.082 | 0.082 | 0.081 |
| $((R_2O/(1-K_2O))+(R'O/(1-CaO))-Al_2O_3)/(SiO_2+Al_2O_3+B_2O_3)$ | 0.081 | -0.088 | 0.082 | -0.103 | -0.103 | -0.120 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | 74 | 149 | 25 | 19 | 37 | 25 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log $\eta$ at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 1 (Continued)

| [mol%] | No. 7 | No. 8 | No. 9 | No. 10 | No. 11 | No. 12 |
|---|---|---|---|---|---|---|
| $SiO_2$ | 79.7 | 79.7 | 79.7 | 79.9 | 79.9 | 79.9 |
| $Al_2O_3$ | 6.5 | 6.5 | 6.5 | 6.5 | 6.5 | 6.5 |
| $B_2O_3$ | 0.0 | 0.0 | 0.0 | 0.0 | 0.0 | 0.0 |
| $Li_2O$ | 9.0 | 2.3 | 2.3 | 13.0 | 0.0 | 6.5 |
| $Na_2O$ | 2.3 | 9.0 | 2.3 | 0.0 | 13.0 | 6.5 |
| $K_2O$ | 2.3 | 2.3 | 9.0 | 0.5 | 0.5 | 0.5 |
| $MgO$ | 0.0 | 0.0 | 0.0 | 0.0 | 0.0 | 0.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.20 | 0.20 | 0.20 | 0.04 | 0.07 | 0.08 |
| $Fe_2O_3$ | 0.007 | 0.007 | 0.008 | 0.008 | 0.008 | 0.004 |
| $TiO_2$ | 0.005 | 0.005 | 0.007 | 0.009 | 0.007 | 0.005 |
| $MoO_3$ | 0.00200 | 0.00001 | 0.00004 | 0.00013 | 0.00004 | 0.00022 |
| $Cl$ | 0.004 | 0.004 | 0.003 | 0.003 | 0.003 | 0.003 |
| $Li_2O+Na_2O+K_2O$ (=$R_2O$) | 13.6 | 13.6 | 13.6 | 13.5 | 13.5 | 13.5 |
| $MgO+CaO+SrO+BaO$ (=$R'O$) | 0.0 | 0.0 | 0.0 | 0.0 | 0.0 | 0.0 |
| $SnO_2+Fe_2O_3+TiO_2+MoO_3$ | 0.21 | 0.21 | 0.22 | 0.06 | 0.09 | 0.09 |
| $R_2O/Al_2O_3$ | 2.092 | 2.092 | 2.092 | 2.077 | 2.077 | 2.077 |
| $R_2O/(5-K_2O)$ | 5.037 | 5.037 | -3.400 | 3.000 | 3.000 | 3.000 |
| $R_2O/(1-K_2O)$ | -10.462 | -10.462 | -1.700 | 27.000 | 27.000 | 27.000 |
| $R'O/(1-CaO)$ | 0.000 | 0.000 | 0.000 | 0.000 | 0.000 | 0.000 |
| $(K_2O+CaO)/R_2O$ | 0.169 | 0.169 | 0.662 | 0.037 | 0.037 | 0.037 |
| $MoO_3/(Fe_2O_3+TiO_2)$ | 0.1667 | 0.0008 | 0.0027 | 0.0076 | 0.0027 | 0.0244 |
| $10SnO_2/(10Fe_2O_3+TiO_2+10SnO_2+100MoO_3)$ | 0.88 | 0.96 | 0.96 | 0.80 | 0.88 | 0.92 |

14

(continued)

| [mol%] | No. 7 | No. 8 | No. 9 | No. 10 | No. 11 | No. 12 |
|---|---|---|---|---|---|---|
| $(R_2O+R'O-Al_2O_3)/(SiO_2+Al_2O_3+B_2O_3)$ | 0.082 | 0.082 | 0.082 | 0.081 | 0.081 | 0.081 |
| $((R_2O/(1-K_2O))+(R'O/(1-CaO))-Al_2O_3)/(SiO_2+Al_2O_3+B_2O_3)$ | -0.197 | -0.197 | -0.095 | 0.237 | 0.237 | 0.237 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | 25 | 31 | 31 | N.A. | N.A. | N.A. |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 2

| [mol%] | No. 13 | No. 14 | No. 15 | No. 16 | No. 17 | No. 18 |
|---|---|---|---|---|---|---|
| $SiO_2$ | 79.9 | 79.9 | 79.9 | 79.3 | 78.8 | 78.3 |
| $Al_2O_3$ | 6.5 | 6.5 | 6.5 | 7.0 | 7.5 | 8.0 |
| $B_2O_3$ | 0.0 | 0.0 | 0.0 | 0.1 | 0.1 | 0.1 |
| $Li_2O$ | 13.4 | 0.0 | 6.7 | 7.0 | 7.0 | 7.0 |
| $Na_2O$ | 0.0 | 13.4 | 6.7 | 6.2 | 6.2 | 6.2 |
| $K_2O$ | 0.1 | 0.1 | 0.1 | 0.3 | 0.3 | 0.3 |
| $MgO$ | 0.0 | 0.0 | 0.0 | 0.0 | 0.0 | 0.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.08 | 0.07 | 0.08 | 0.10 | 0.12 | 0.09 |
| $Fe_2O_3$ | 0.007 | 0.007 | 0.007 | 0.007 | 0.003 | 0.008 |
| $TiO_2$ | 0.007 | 0.007 | 0.007 | 0.007 | 0.014 | 0.011 |
| $MoO_3$ | 0.00004 | 0.00013 | 0.00022 | 0.00013 | 0.00004 | 0.00013 |
| $Cl$ | 0.004 | 0.004 | 0.004 | 0.004 | 0.004 | 0.016 |
| $Li_2O+Na_2O+K_2O$ ($=R_2O$) | 13.5 | 13.5 | 13.5 | 13.5 | 13.5 | 13.5 |
| $MgO+CaO+SrO+BaO$ ($=R'O$) | 0.0 | 0.0 | 0.0 | 0.0 | 0.0 | 0.0 |
| $SnO_2+Fe_2O_3+TiO_2+MoO_3$ | 0.09 | 0.08 | 0.09 | 0.11 | 0.14 | 0.11 |
| $R_2O/Al_2O_3$ | 2.077 | 2.077 | 2.077 | 1.929 | 1.800 | 1.688 |
| $R_2O/(5-K_2O)$ | 2.755 | 2.755 | 2.755 | 2.872 | 2.872 | 2.872 |
| $R_2O/(1-K_2O)$ | 15.000 | 15.000 | 15.000 | 19.286 | 19.286 | 19.286 |
| $R'O/(1-CaO)$ | 0.000 | 0.000 | 0.000 | 0.000 | 0.000 | 0.000 |
| $(K_2O+CaO)/R_2O$ | 0.007 | 0.007 | 0.007 | 0.022 | 0.022 | 0.022 |
| $MoO_3/(Fe_2O_3+TiO_2)$ | 0.0029 | 0.0093 | 0.0157 | 0.0093 | 0.0024 | 0.0068 |
| $10SnO_2/(10Fe_2O_3+TiO_2+10SnO_2+100MoO_3)$ | 0.91 | 0.89 | 0.89 | 0.92 | 0.96 | 0.90 |

(continued)

| [mol%] | No. 13 | No. 14 | No. 15 | No. 16 | No. 17 | No. 18 |
|---|---|---|---|---|---|---|
| $(R_2O+R'O-Al_2O_3)/(SiO_2+Al_2O_3+B_2O_3)$ | 0.081 | 0.081 | 0.081 | 0.075 | 0.069 | 0.064 |
| $((R_2O/(1-K_2O))+(R'O/(1-CaO))-Al_2O_3)/(SiO_2+Al_2O_3+B_2O_3)$ | 0.098 | 0.098 | 0.098 | 0.142 | 0.136 | 0.131 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | N.A. | N.A. | N.A. | N.A. | N.A. | N.A. |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log $\eta$ at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 2 (Continued)

| [mol%] | No. 19 | No. 20 | No. 21 | No. 22 | No. 23 | No. 24 |
|---|---|---|---|---|---|---|
| $SiO_2$ | 76.3 | 75.3 | 74.8 | 73.8 | 78.9 | 77.9 |
| $Al_2O_3$ | 9.0 | 10.0 | 8.0 | 9.0 | 6.5 | 6.5 |
| $B_2O_3$ | 0.1 | 0.1 | 0.0 | 0.0 | 0.0 | 0.0 |
| $Li_2O$ | 7.0 | 8.0 | 8.0 | 9.0 | 14.0 | 0.5 |
| $Na_2O$ | 7.2 | 6.2 | 9.0 | 8.0 | 0.5 | 15.0 |
| $K_2O$ | 0.3 | 0.3 | 0.0 | 0.0 | 0.0 | 0.0 |
| $MgO$ | 0.0 | 0.0 | 0.1 | 0.0 | 0.0 | 0.0 |
| $CaO$ | 0.0 | 0.0 | 0.0 | 0.1 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.06 | 0.05 | 0.04 | 0.05 | 0.06 | 0.05 |
| $Fe_2O_3$ | 0.005 | 0.005 | 0.005 | 0.005 | 0.005 | 0.006 |
| $TiO_2$ | 0.010 | 0.010 | 0.012 | 0.010 | 0.010 | 0.014 |
| $MoO_3$ | 0.00022 | 0.00004 | 0.00013 | 0.00022 | 0.00022 | 0.00022 |
| $Cl$ | 0.014 | 0.016 | 0.016 | 0.014 | 0.014 | 0.016 |
| $Li_2O+Na_2O+K_2O\ (=R_2O)$ | 14.5 | 14.5 | 17.0 | 17.0 | 14.5 | 15.5 |
| $MgO+CaO+SrO+BaO\ (=R'O)$ | 0.0 | 0.0 | 0.1 | 0.1 | 0.0 | 0.0 |
| $SnO_2+Fe_2O_3+TiO_2+MoO_3$ | 0.08 | 0.07 | 0.06 | 0.07 | 0.08 | 0.07 |
| $R_2O/Al_2O_3$ | 1.611 | 1.450 | 2.125 | 1.889 | 2.231 | 2.385 |
| $R_2O/(5-K_2O)$ | 3.085 | 3.085 | 3.400 | 3.400 | 2.900 | 3.100 |
| $R_2O/(1-K_2O)$ | 20.714 | 20.714 | 17.000 | 17.000 | 14.500 | 15.500 |
| $R'O/(1-CaO)$ | 0.000 | 0.000 | 0.100 | 0.111 | 0.000 | 0.000 |
| $(K_2O+CaO)/R_2O$ | 0.021 | 0.021 | 0.000 | 0.006 | 0.000 | 0.000 |
| $MoO_3/(Fe_2O_3+TiO_2)$ | 0.0147 | 0.0027 | 0.0076 | 0.0147 | 0.0147 | 0.0110 |
| $10SnO_2/(10Fe_2O_3+TiO_2+10SnO_2+100MoO_3)$ | 0.88 | 0.89 | 0.84 | 0.86 | 0.88 | 0.84 |

18

| [mol%] | No. 19 | No. 20 | No. 21 | No. 22 | No. 23 | No. 24 |
|---|---|---|---|---|---|---|
| $(R_2O+R'O-Al_2O_3)/(SiO_2+Al_2O_3+B_2O_3)$ | 0.064 | 0.053 | 0.110 | 0.098 | 0.094 | 0.107 |
| $((R_2O/(1-K_2O))+(R'O/(1-CaO))-Al_2O_3)/(SiO_2+Al_2O_3+B_2O_3)$ | 0.137 | 0.125 | 0.110 | 0.098 | 0.094 | 0.107 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | N.A. | N.A. | N.A. | N.A. | N.A. | N.A. |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

EP 4 644 343 A1

Table 3

| [mol%] | No. 25 | No. 26 | No. 27 | No. 28 | No. 29 | No. 30 |
|---|---|---|---|---|---|---|
| $SiO_2$ | 79.9 | 79.9 | 79.8 | 79.7 | 78.7 | 78.8 |
| $Al_2O_3$ | 6.5 | 6.5 | 6.5 | 6.5 | 6.5 | 6.5 |
| $B_2O_3$ | 0.0 | 0.0 | 0.1 | 0.1 | 0.1 | 0.1 |
| $Li_2O$ | 13.4 | 13.4 | 13.0 | 12.5 | 8.0 | 8.0 |
| $Na_2O$ | 0.0 | 0.0 | 0.0 | 0.0 | 6.3 | 6.0 |
| $K_2O$ | 0.0 | 0.0 | 0.0 | 0.0 | 0.2 | 0.0 |
| $MgO$ | 0.0 | 0.0 | 0.5 | 1.0 | 0.0 | 0.0 |
| $CaO$ | 0.0 | 0.0 | 0.0 | 0.0 | 0.0 | 0.0 |
| $SrO$ | 0.1 | 0.0 | 0.0 | 0.0 | 0.0 | 0.0 |
| $BaO$ | 0.0 | 0.1 | 0.0 | 0.0 | 0.0 | 0.0 |
| $ZrO_2$ | 0.0 | 0.0 | 0.0 | 0.0 | 0.1 | 0.5 |
| $SnO_2$ | 0.05 | 0.04 | 0.10 | 0.15 | 0.13 | 0.08 |
| $Fe_2O_3$ | 0.006 | 0.003 | 0.005 | 0.005 | 0.004 | 0.004 |
| $TiO_2$ | 0.011 | 0.012 | 0.014 | 0.011 | 0.011 | 0.011 |
| $MoO_3$ | 0.00022 | 0.00013 | 0.00004 | 0.00013 | 0.00022 | 0.00013 |
| $Cl$ | 0.014 | 0.025 | 0.020 | 0.012 | 0.020 | 0.020 |
| $Li_2O+Na_2O+K_2O$ (=$R_2O$) | 13.4 | 13.4 | 13.0 | 12.5 | 14.5 | 14.0 |
| $MgO+CaO+SrO+BaO$ (=$R'O$) | 0.1 | 0.1 | 0.5 | 1.0 | 0.0 | 0.0 |
| $SnO_2+Fe_2O_3+TiO_2+MoO_3$ | 0.07 | 0.06 | 0.12 | 0.17 | 0.15 | 0.10 |
| $R_2O/Al_2O_3$ | 2.062 | 2.062 | 2.000 | 1.923 | 2.231 | 2.154 |
| $R_2O/(5-K_2O)$ | 2.680 | 2.680 | 2.600 | 2.500 | 3.021 | 2.800 |
| $R_2O/(1-K_2O)$ | 13.400 | 13.400 | 13.000 | 12.500 | 18.125 | 14.000 |
| $R'O/(1-CaO)$ | 0.100 | 0.100 | 0.500 | 1.000 | 0.000 | 0.000 |
| $(K_2O+CaO)/R_2O$ | 0.000 | 0.000 | 0.000 | 0.000 | 0.014 | 0.000 |
| $MoO_3/(Fe_2O_3+TiO_2)$ | 0.0129 | 0.0087 | 0.0021 | 0.0081 | 0.0147 | 0.0087 |
| $10SnO_2/(10Fe_2O_3+TiO_2+10SnO_2+100MoO_3)$ | 0.84 | 0.88 | 0.94 | 0.95 | 0.95 | 0.93 |

(continued)

| [mol%] | No. 25 | No. 26 | No. 27 | No. 28 | No. 29 | No. 30 |
|---|---|---|---|---|---|---|
| $(R_2O+R'O-Al_2O_3)/(SiO_2+Al_2O_3+B_2O_3)$ | 0.081 | 0.081 | 0.081 | 0.081 | 0.094 | 0.088 |
| $((R_2O/(1-K_2O))+(R'O/(1-CaO))-Al_2O_3)/(SiO_2+Al_2O_3+B_2O_3)$ | 0.081 | 0.081 | 0.081 | 0.081 | 0.136 | 0.088 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | N.A. | N.A. | N.A. | N.A. | N.A. | N.A. |
| Acid resistance test (YBB00342004) [mg/dm²] | N.A. | N.A. | N.A. | N.A. | N.A. | N.A. |
| Alkali resistance test (ISO 695) [mg/dm²] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 3 (Continued)

| [mol%] | No. 31 | No. 32 | No. 33 | No. 34 | No. 35 | No. 36 |
|---|---|---|---|---|---|---|
| $SiO_2$ | 78.3 | 79.8 | 80.8 | 81.8 | 72.9 | 71.9 |
| $Al_2O_3$ | 6.5 | 5.5 | 4.5 | 3.0 | 9.0 | 9.0 |
| $B_2O_3$ | 0.1 | 0.1 | 0.1 | 0.1 | 0.5 | 1.0 |
| $Li_2O$ | 8.0 | 8.0 | 8.0 | 8.0 | 8.0 | 8.0 |
| $Na_2O$ | 6.0 | 6.0 | 6.0 | 6.0 | 8.0 | 8.0 |
| $K_2O$ | 0.0 | 0.0 | 0.0 | 0.0 | 0.0 | 0.0 |
| $MgO$ | 0.0 | 0.0 | 0.0 | 0.5 | 0.5 | 1.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 1.0 | 0.5 | 0.5 | 0.5 | 1.0 | 1.0 |
| $SnO_2$ | 0.08 | 0.09 | 0.07 | 0.05 | 0.08 | 0.07 |
| $Fe_2O_3$ | 0.004 | 0.004 | 0.004 | 0.004 | 0.004 | 0.005 |
| $TiO_2$ | 0.010 | 0.011 | 0.012 | 0.014 | 0.015 | 0.011 |
| $MoO_3$ | 0.00022 | 0.00013 | 0.00001 | 0.00004 | 0.00013 | 0.00022 |
| $Cl$ | 0.018 | 0.020 | 0.020 | 0.020 | 0.020 | 0.020 |
| $Li_2O+Na_2O+K_2O$ (=$R_2O$) | 14.0 | 14.0 | 14.0 | 14.0 | 16.0 | 16.0 |
| $MgO+CaO+SrO+BaO$ (=$R'O$) | 0.0 | 0.0 | 0.0 | 0.5 | 0.5 | 1.0 |
| $SnO_2+Fe_2O_3+TiO_2+MoO_3$ | 0.09 | 0.11 | 0.09 | 0.07 | 0.10 | 0.09 |
| $R_2O/Al_2O_3$ | 2.154 | 2.545 | 3.111 | 4.667 | 1.778 | 1.778 |
| $R_2O/(5-K_2O)$ | 2.800 | 2.800 | 2.800 | 2.800 | 3.200 | 3.200 |
| $R_2O/(1-K_2O)$ | 14.000 | 14.000 | 14.000 | 14.000 | 16.000 | 16.000 |
| $R'O/(1-CaO)$ | 0.000 | 0.000 | 0.000 | 0.500 | 0.500 | 1.000 |
| $(K_2O+CaO)/R_2O$ | 0.000 | 0.000 | 0.000 | 0.000 | 0.000 | 0.000 |
| $MoO_3/(Fe_2O_3+TiO_2)$ | 0.0157 | 0.0087 | 0.0006 | 0.0022 | 0.0068 | 0.0138 |
| $10SnO_2/(10Fe_2O_3+TiO_2+10SnO_2+100MoO_3)$ | 0.92 | 0.93 | 0.93 | 0.90 | 0.92 | 0.89 |

(continued)

| [mol%] | No. 31 | No. 32 | No. 33 | No. 34 | No. 35 | No. 36 |
|---|---|---|---|---|---|---|
| $(R_2O+R'O-Al_2O_3)/(SiO_2+Al_2O_3+B_2O_3)$ | 0.088 | 0.100 | 0.111 | 0.135 | 0.091 | 0.098 |
| $((R_2O/(1-K_2O))+(R'O/(1-CaO))-Al_2O_3)/(SiO_2+Al_2O_3+B_2O_3)$ | 0.088 | 0.100 | 0.111 | 0.135 | 0.091 | 0.098 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | N.A. | N.A. | N.A. | N.A. | N.A. | N.A. |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log $\eta$ at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 4

| [mol%] | No. 37 | No. 38 | No. 39 | No. 40 | No. 41 | No. 42 |
|---|---|---|---|---|---|---|
| $SiO_2$ | 79.9 | 79.8 | 79.8 | 79.8 | 79.9 | 79.8 |
| $Al_2O_3$ | 6.5 | 6.5 | 6.5 | 6.5 | 6.5 | 6.5 |
| $B_2O_3$ | 0.0 | 0.0 | 0.0 | 0.0 | 0.0 | 0.0 |
| $Li_2O$ | 13.5 | 6.8 | 6.8 | 0.0 | 4.5 | 9.0 |
| $Na_2O$ | 0.0 | 6.8 | 0.0 | 6.8 | 4.5 | 2.3 |
| $K_2O$ | 0.0 | 0.0 | 6.8 | 6.8 | 4.5 | 2.3 |
| MgO | 0.0 | 0.0 | 0.0 | 0.0 | 0.0 | 0.0 |
| CaO | 0.0 | 0.0 | 0.0 | 0.0 | 0.0 | 0.0 |
| SrO | 0.0 | 0.0 | 0.0 | 0.0 | 0.0 | 0.0 |
| BaO | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.08 | 0.07 | 0.08 | 0.09 | 0.07 | 0.08 |
| $Fe_2O_3$ | 0.008 | 0.008 | 0.008 | 0.008 | 0.007 | 0.007 |
| $TiO_2$ | 0.007 | 0.007 | 0.007 | 0.005 | 0.007 | 0.005 |
| $MoO_3$ | 0.00001 | 0.00013 | 0.00022 | 0.00044 | 0.001 | 0.002 |
| Cl | 0.004 | 0.004 | 0.003 | 0.004 | 0.004 | 0.004 |
| $Li_2O+Na_2O+K_2O$ (=$R_2O$) | 13.5 | 13.6 | 13.6 | 13.6 | 13.5 | 13.6 |
| $MgO+CaO+SrO+BaO$ (=R'O) | 0.0 | 0.0 | 0.0 | 0.0 | 0.0 | 0.0 |
| $SnO_2+Fe_2O_3+TiO_2+MoO_3$ | 0.10 | 0.09 | 0.10 | 0.10 | 0.09 | 0.09 |
| $R_2O/Al_2O_3$ | 2.077 | 2.092 | 2.092 | 2.092 | 2.077 | 2.092 |
| $R_2O/(5-K_2O)$ | 2.700 | 2.720 | -7.556 | -7.556 | 27.000 | 5.037 |
| $R_2O/(1-K_2O)$ | 13.500 | 13.600 | -2.345 | -2.345 | -3.857 | -10.462 |
| $R'O/(1-CaO)$ | 0.000 | 0.000 | 0.000 | 0.000 | 0.000 | 0.000 |
| $(K_2O+CaO)/R_2O$ | 0.000 | 0.000 | 0.500 | 0.500 | 0.333 | 0.169 |
| $MoO_3/(Fe_2O_3+TiO_2)$ | 0.0007 | 0.0087 | 0.0147 | 0.0338 | 0.0714 | 0.1667 |
| $10SnO_2/(10Fe_2O_3+TiO_2+10SnO_2+100MoO_3)$ | 0.90 | 0.88 | 0.88 | 0.87 | 0.80 | 0.74 |

(continued)

| [mol%] | No. 37 | No. 38 | No. 39 | No. 40 | No. 41 | No. 42 |
|---|---|---|---|---|---|---|
| $(R_2O+R'O-Al_2O_3)/(SiO_2+Al_2O_3+B_2O_3)$ | 0.081 | 0.082 | 0.082 | 0.082 | 0.081 | 0.082 |
| $((R_2O/(1-K_2KO))+(R'O/(1-CaO))-Al_2O_3)/(SiO_2+Al_2O_3+B_2O_3)$ | 0.081 | 0.082 | -0.102 | -0.102 | -0.120 | -0.197 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | N.A. | N.A. | N.A. | N.A. | N.A. | N.A. |
| Acid resistance test (YBB00342004) [mg/dm²] | N.A. | N.A. | N.A. | N.A. | N.A. | N.A. |
| Alkali resistance test (ISO 695) [mg/dm²] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 4 (Continued)

| [mol%] | No. 43 | No. 44 | No. 45 | No. 46 | No. 47 | No. 48 |
|---|---|---|---|---|---|---|
| $SiO_2$ | 79.8 | 79.8 | 79.7 | 79.8 | 77.0 | 76.3 |
| $Al_2O_3$ | 6.5 | 6.5 | 6.5 | 6.5 | 7.0 | 6.5 |
| $B_2O_3$ | 0.0 | 0.0 | 0.0 | 0.0 | 0.0 | 0.0 |
| $Li_2O$ | 2.3 | 2.3 | 6.8 | 13.6 | 7.0 | 8.0 |
| $Na_2O$ | 9.0 | 2.3 | 6.8 | 0.0 | 6.3 | 5.5 |
| $K_2O$ | 2.3 | 9.0 | 0.0 | 0.0 | 0.3 | 0.0 |
| $MgO$ | 0.0 | 0.0 | 0.0 | 0.0 | 0.0 | 0.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.0 | 0.0 | 0.0 | 0.0 | 0.0 | 0.0 |
| $SnO_2$ | 0.07 | 0.09 | 0.10 | 0.05 | 0.08 | 3.70 |
| $Fe_2O_3$ | 0.007 | 0.008 | 0.200 | 0.005 | 0.005 | 0.010 |
| $TiO_2$ | 0.005 | 0.007 | 0.010 | 0.010 | 2.300 | 0.012 |
| $MoO_3$ | 0.00001 | 0.00004 | 0.00022 | 0.05000 | 0.00013 | 0.00013 |
| $Cl$ | 0.004 | 0.003 | 0.014 | 0.019 | 0.025 | 0.014 |
| $Li_2O+Na_2O+K_2O\ (=R_2O)$ | 13.6 | 13.6 | 13.6 | 13.6 | 13.6 | 13.5 |
| $MgO+CaO+SrO+BaO\ (=R'O)$ | 0.0 | 0.0 | 0.0 | 0.0 | 0.0 | 0.0 |
| $SnO_2+Fe_2O_3+TiO_2+MoO_3$ | 0.08 | 0.11 | 0.31 | 0.12 | 2.39 | 3.72 |
| $R_2O/Al_2O_3$ | 2.092 | 2.092 | 2.092 | 2.092 | 1.943 | 2.077 |
| $R_2O/(5-K_2O)$ | 5.037 | -3.400 | 2.720 | 2.720 | 2.894 | 2.700 |
| $R_2O/(1-K_2O)$ | -10.462 | -1.700 | 13.600 | 13.600 | 19.429 | 13.500 |
| $R'O/(1-CaO)$ | 0.000 | 0.000 | 0.000 | 0.000 | 0.000 | 0.000 |
| $(K_2O+CaO)/R_2O$ | 0.169 | 0.662 | 0.000 | 0.000 | 0.022 | 0.000 |
| $MoO_3/(Fe_2O_3+TiO_2)$ | 0.0008 | 0.0027 | 0.0010 | 3.3333 | 0.0001 | 0.0059 |
| $10SnO_2/(10Fe_2O_3+TiO_2+10SnO_2+100MoO_3)$ | 0.90 | 0.91 | 0.33 | 0.09 | 0.25 | 1.00 |

EP 4 644 343 A1

(continued)

| [mol%] | No. 43 | No. 44 | No. 45 | No. 46 | No. 47 | No. 48 |
|---|---|---|---|---|---|---|
| $(R_2O+R'O-Al_2O_3)/(SiO_2+Al_2O_3+B_2O_3)$ | 0.082 | 0.082 | 0.082 | 0.082 | 0.079 | 0.085 |
| $((R_2O/(1-K_2O))+(R'O/(1-CaO))-Al_2O_3)/(SiO_2+Al_2O_3+B_2O_3)$ | -0.197 | -0.095 | 0.082 | 0.082 | 0.148 | 0.085 |
| Transparency | Transparent | Transparent | Colored | Colored | Colored | Colored |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [µg/g] | N.A. | N.A. | N.A. | N.A. | N.A. | N.A. |
| Acid resistance test (YBB00342004) [mg/dm²] | N.A. | N.A. | N.A. | N.A. | N.A. | N.A. |
| Alkali resistance test (ISO 695) [mg/dm²] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [µm] | N.A. | N.A. | N.A. | N.A. | N.A. | N.A. |

Table 5

| [mol%] | No. 49 | No. 50 | No. 51 | No. 52 | No. 53 | No. 54 |
|---|---|---|---|---|---|---|
| $SiO_2$ | 78.6 | 79.5 | 80.0 | 80.4 | 79.6 | 78.6 |
| $Al_2O_3$ | 6.8 | 5.9 | 5.4 | 5.0 | 5.0 | 5.0 |
| $B_2O_3$ | 0.1 | 0.1 | 0.1 | 0.1 | 0.1 | 0.1 |
| $Li_2O$ | 6.1 | 6.1 | 6.1 | 6.1 | 4.8 | 4.8 |
| $Na_2O$ | 4.9 | 4.9 | 4.9 | 4.9 | 3.6 | 4.6 |
| $K_2O$ | 2.7 | 2.7 | 2.7 | 2.7 | 2.7 | 2.7 |
| MgO | 0.0 | 0.0 | 0.0 | 0.0 | 0.0 | 0.0 |
| CaO | 0.0 | 0.0 | 0.0 | 0.0 | 3.4 | 3.4 |
| SrO | 0.0 | 0.0 | 0.0 | 0.0 | 0.0 | 0.0 |
| BaO | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.15 | 0.15 | 0.15 | 0.15 | 0.17 | 0.17 |
| $Fe_2O_3$ | 0.004 | 0.004 | 0.004 | 0.003 | 0.004 | 0.004 |
| $TiO_2$ | 0.008 | 0.007 | 0.008 | 0.008 | 0.008 | 0.007 |
| $MoO_3$ | 0.0001 | 0.0001 | 0.0001 | 0.0001 | 0.0005 | 0.0005 |
| Cl | 0.007 | 0.007 | 0.007 | 0.007 | 0.005 | 0.007 |
| $Li_2O+Na_2O+K_2O$ (=$R_2O$) | 13.7 | 13.7 | 13.7 | 13.7 | 11.1 | 12.1 |
| $MgO+CaO+SrO+BaO$ (=R'O) | 0.0 | 0.0 | 0.0 | 0.0 | 3.4 | 3.4 |
| $SnO_2+Fe_2O_3+TiO_2+MoO_3$ | 0.16 | 0.16 | 0.16 | 0.16 | 0.18 | 0.18 |
| $R_2O/Al_2O_3$ | 2.015 | 2.322 | 2.537 | 2.740 | 2.220 | 2.420 |
| $R_2O/(5-K_2O)$ | 5.957 | 5.957 | 5.957 | 5.957 | 4.826 | 5.261 |
| $R_2O/(1-K_2O)$ | -8.059 | -8.059 | -8.059 | -8.059 | -6.529 | -7.118 |
| R'O/(1-CaO) | 0.000 | 0.000 | 0.000 | 0.000 | -1.417 | -1.417 |
| $(K_2O+CaO)/R_2O$ | 0.197 | 0.197 | 0.197 | 0.197 | 0.550 | 0.504 |
| $MoO_3/(Fe_2O_3+TiO_2)$ | 0.0083 | 0.0091 | 0.0083 | 0.0091 | 0.0417 | 0.0455 |
| $10SnO_2/(10Fe_2O_3+TiO_2+10SnO_2+100MoO_3)$ | 0.96 | 0.96 | 0.96 | 0.97 | 0.95 | 0.95 |

28

EP 4 644 343 A1

(continued)

| [mol%] | No. 49 | No. 50 | No. 51 | No. 52 | No. 53 | No. 54 |
|---|---|---|---|---|---|---|
| $(R_2O+R'O-Al_2O_3)/(SiO_2+Al_2O_3+B_2O_3)$ | 0.081 | 0.091 | 0.097 | 0.102 | 0.112 | 0.125 |
| $((R_2O/(1-K_2O))+(R'O/(1-CaO))-Al_2O_3)/(SiO_2+Al_2O_3+B_2O_3)$ | -0.174 | -0.163 | -0.157 | -0.153 | -0.153 | -0.162 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | 33.5 | 37.5 | 39.4 | 45.0 | 45.3 | 56.1 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log $\eta$ at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 5 (Continued)

| [mol%] | No. 55 | No. 56 | No. 57 | No. 58 | No. 59 | No. 60 |
|---|---|---|---|---|---|---|
| $SiO_2$ | 78.6 | 77.8 | 82.7 | 79.5 | 80.8 | 82.1 |
| $Al_2O_3$ | 4.5 | 4.5 | 3.8 | 4.9 | 4.6 | 4.3 |
| $B_2O_3$ | 0.1 | 0.1 | 0.0 | 0.1 | 0.1 | 0.1 |
| $Li_2O$ | 4.8 | 4.8 | 6.1 | 6.1 | 6.1 | 6.1 |
| $Na_2O$ | 4.6 | 4.6 | 3.9 | 5.9 | 4.9 | 3.9 |
| $K_2O$ | 3.2 | 4.0 | 2.7 | 2.7 | 2.7 | 2.7 |
| $MgO$ | 0.0 | 0.0 | 0.0 | 0.0 | 0.0 | 0.0 |
| $CaO$ | 3.4 | 3.4 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.17 | 0.17 | 0.19 | 0.19 | 0.19 | 0.19 |
| $Fe_2O_3$ | 0.004 | 0.004 | 0.003 | 0.003 | 0.003 | 0.003 |
| $TiO_2$ | 0.007 | 0.007 | 0.008 | 0.008 | 0.008 | 0.010 |
| $MoO_3$ | 0.0005 | 0.0005 | 0.0003 | 0.0003 | 0.0003 | 0.0003 |
| $Cl$ | 0.005 | 0.005 | 0.007 | 0.009 | 0.007 | 0.005 |
| $Li_2O+Na_2O+K_2O$ (=$R_2O$) | 12.6 | 13.4 | 12.7 | 14.7 | 13.7 | 12.7 |
| $MgO+CaO+SrO+BaO$ (=$R'O$) | 3.4 | 3.4 | 0.0 | 0.0 | 0.0 | 0.0 |
| $SnO_2+Fe_2O_3+TiO_2+MoO_3$ | 0.18 | 0.18 | 0.20 | 0.20 | 0.20 | 0.20 |
| $R_2O/Al_2O_3$ | 2.800 | 2.978 | 3.342 | 3.000 | 2.978 | 2.953 |
| $R_2O/(5-K_2O)$ | 7.000 | 13.400 | 5.522 | 6.391 | 5.957 | 5.522 |
| $R_2O/(1-K_2O)$ | -5.727 | -4.467 | -7.471 | -8.647 | -8.059 | -7.471 |
| $R'O/(1-CaO)$ | -1.417 | -1.417 | 0.000 | 0.000 | 0.000 | 0.000 |
| $(K_2O+CaO)/R_2O$ | 0.524 | 0.552 | 0.213 | 0.184 | 0.197 | 0.213 |
| $MoO_3/(Fe_2O_3+TiO_2)$ | 0.0455 | 0.0455 | 0.0273 | 0.0273 | 0.0273 | 0.0231 |
| $10SnO_2/(10Fe_2O_3+TiO_2+10SnO_2+100MoO_3)$ | 0.95 | 0.95 | 0.97 | 0.97 | 0.97 | 0.96 |

(continued)

| [mol%] | No. 55 | No. 56 | No. 57 | No. 58 | No. 59 | No. 60 |
|---|---|---|---|---|---|---|
| $(R_2O+R'O-Al_2O_3)/(SiO_2+Al_2O_3+B_2O_3)$ | 0.138 | 0.149 | 0.103 | 0.116 | 0.106 | 0.097 |
| $((R_2O/(1-K_2O))+(R'O/(1-CaO))-Al_2O_3)/(SiO_2+Al_2O_3+B_2O_3)$ | -0.140 | -0.126 | -0.130 | -0.160 | -0.148 | -0.136 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | 71.3 | 92.7 | 49.0 | 61.1 | 49.6 | 42.5 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 6

| [mol%] | No. 61 | No. 62 | No. 63 | No. 64 | No. 65 | No. 66 |
|---|---|---|---|---|---|---|
| $SiO_2$ | 72.7 | 74.7 | 77.2 | 77.7 | 77.0 | 79.3 |
| $Al_2O_3$ | 12.5 | 11.5 | 9.0 | 8.5 | 6.0 | 6.0 |
| $B_2O_3$ | 0.1 | 0.1 | 0.1 | 0.1 | 0.1 | 0.1 |
| $Li_2O$ | 6.1 | 6.1 | 6.1 | 6.1 | 6.1 | 6.1 |
| $Na_2O$ | 5.1 | 4.1 | 4.1 | 4.1 | 5.9 | 5.9 |
| $K_2O$ | 2.7 | 2.7 | 2.7 | 2.7 | 1.9 | 1.9 |
| $MgO$ | 0.0 | 0.0 | 0.0 | 0.0 | 0.0 | 0.0 |
| $CaO$ | 0.0 | 0.0 | 0.0 | 0.0 | 2.4 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.15 | 0.15 | 0.15 | 0.15 | 0.04 | 0.05 |
| $Fe_2O_3$ | 0.004 | 0.004 | 0.004 | 0.004 | 0.005 | 0.005 |
| $TiO_2$ | 0.007 | 0.007 | 0.007 | 0.007 | 0.010 | 0.010 |
| $MoO_3$ | 0.0001 | 0.0001 | 0.0001 | 0.0001 | 0.0003 | 0.0003 |
| $Cl$ | 0.007 | 0.007 | 0.007 | 0.007 | 0.014 | 0.014 |
| $Li_2O+Na_2O+K_2O$ ($=R_2O$) | 13.9 | 12.9 | 12.9 | 12.9 | 13.9 | 13.9 |
| $MgO+CaO+SrO+BaO$ ($=R'O$) | 0.0 | 0.0 | 0.0 | 0.0 | 2.4 | 0.0 |
| $SnO_2+Fe_2O_3+TiO_2+MoO_3$ | 0.16 | 0.16 | 0.16 | 0.16 | 0.06 | 0.07 |
| $R_2O/Al_2O_3$ | 1.112 | 1.122 | 1.433 | 1.518 | 2.317 | 2.317 |
| $R_2O/(5-K_2O)$ | 6.043 | 5.609 | 5.609 | 5.609 | 4.484 | 4.484 |
| $R_2O/(1-K_2O)$ | -8.176 | -7.588 | -7.588 | -7.588 | -15.444 | -15.444 |
| $R'O/(1-CaO)$ | 0.000 | 0.000 | 0.000 | 0.000 | -1.714 | 0.000 |
| $(K_2O+CaO)/R_2O$ | 0.194 | 0.209 | 0.209 | 0.209 | 0.309 | 0.137 |
| $MoO_3/(Fe_2O_3+TiO_2)$ | 0.0091 | 0.0091 | 0.0091 | 0.0091 | 0.0200 | 0.0200 |
| $10SnO_2/(10Fe_2O_3+TiO_2+10SnO_2+100MoO_3)$ | 0.96 | 0.96 | 0.96 | 0.96 | 0.82 | 0.85 |

32

(continued)

| [mol%] | No. 61 | No. 62 | No. 63 | No. 64 | No. 65 | No. 66 |
|---|---|---|---|---|---|---|
| $(R_2O+R'O-Al_2O_3)/(SiO_2+Al_2O_3+B_2O_3)$ | 0.016 | 0.016 | 0.045 | 0.051 | 0.124 | 0.093 |
| $((R_2O/(1-K_2O))+(R'O/((1-CaO))-Al_2O_3)/(SiO_2+Al_2O_3+B_2O_3)$ | -0.242 | -0.221 | -0.192 | -0.186 | -0.279 | -0.251 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | 1176 | 1219 |
| $10^{2.5}$ dPa·s [°C] | N.A. | N.A. | N.A. | N.A. | N.A. | N.A. |
| Hydrolytic resistance test [μg/g] | 40.6 | 36.0 | 33.8 | 31.3 | 58.9 | 39.4 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 6 (Continued)

| [mol%] | No. 67 | No. 68 | No. 69 | No. 70 | No. 71 | No. 72 |
|---|---|---|---|---|---|---|
| $SiO_2$ | 77.5 | 77.5 | 77.2 | 77.2 | 77.7 | 76.7 |
| $Al_2O_3$ | 6.0 | 6.0 | 6.2 | 6.1 | 6.0 | 6.0 |
| $B_2O_3$ | 0.1 | 0.1 | 0.1 | 0.1 | 0.1 | 0.1 |
| $Li_2O$ | 6.2 | 6.1 | 6.3 | 6.1 | 6.1 | 6.1 |
| $Na_2O$ | 5.8 | 5.9 | 5.8 | 4.9 | 5.8 | 5.9 |
| $K_2O$ | 1.5 | 1.5 | 1.5 | 1.9 | 0.0 | 0.0 |
| $MgO$ | 0.0 | 0.0 | 0.0 | 0.0 | 0.0 | 1.5 |
| $CaO$ | 2.3 | 2.3 | 2.3 | 3.1 | 3.6 | 3.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.04 | 0.04 | 0.03 | 0.04 | 0.06 | 0.07 |
| $Fe_2O_3$ | 0.005 | 0.005 | 0.005 | 0.005 | 0.005 | 0.006 |
| $TiO_2$ | 0.010 | 0.010 | 0.010 | 0.010 | 0.010 | 0.010 |
| $MoO_3$ | 0.0003 | 0.0003 | 0.0002 | 0.0002 | 0.0002 | 0.0002 |
| $Cl$ | 0.016 | 0.016 | 0.016 | 0.014 | 0.014 | 0.016 |
| $Li_2O+Na_2O+K_2O$ (=$R_2O$) | 13.5 | 13.5 | 13.6 | 12.9 | 11.9 | 12.0 |
| $MgO+CaO+SrO+BaO$ (=$R'O$) | 2.3 | 2.3 | 2.3 | 3.1 | 3.6 | 4.5 |
| $SnO_2+Fe_2O_3+TiO_2+MoO_3$ | 0.06 | 0.06 | 0.05 | 0.06 | 0.08 | 0.09 |
| $R_2O/Al_2O_3$ | 2.250 | 2.250 | 2.194 | 2.115 | 1.983 | 2.000 |
| $R_2O/(5-K_2O)$ | 3.857 | 3.857 | 3.886 | 4.161 | 2.380 | 2.400 |
| $R_2O/(1-K_2O)$ | -27.000 | -27.000 | -27.200 | -14.333 | 11.900 | 12.000 |
| $R'O/(1-CaO)$ | -1.769 | -1.769 | -1.769 | -1.476 | -1.385 | -2.250 |
| $(K_2O+CaO)/R_2O$ | 0.281 | 0.281 | 0.279 | 0.388 | 0.303 | 0.250 |
| $MoO_3/(Fe_2O_3+TiO_2)$ | 0.0200 | 0.0200 | 0.0133 | 0.0133 | 0.0133 | 0.0125 |
| $10SnO_2/(10Fe_2O_3+TiO_2+10SnO_2+100MoO_3)$ | 0.82 | 0.82 | 0.79 | 0.83 | 0.88 | 0.89 |

| [mol%] | No. 67 | No. 68 | No. 69 | No. 70 | No. 71 | No. 72 |
|---|---|---|---|---|---|---|
| $(R_2O+R'O-Al_2O_3)/(SiO_2+Al_2O_3+B_2O_3)$ | 0.117 | 0.117 | 0.116 | 0.119 | 0.113 | 0.127 |
| $((R_2O/(1-K_2O))+(R'O/(1-CaO))-Al_2O_3)/(SiO_2+Al_2O_3+B_2O_3)$ | -0.416 | -0.416 | -0.421 | -0.263 | 0.054 | 0.045 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | 479 | 479 | 479 | 487 | 499 | 494 |
| Ta [°C] | 524 | 523 | 524 | 532 | 544 | 539 |
| Ts [°C] | 758 | 758 | 758 | 767 | 779 | 777 |
| Working temperature ($10^{4.0}$ dPa·s) [°C] | 1178 | 1180 | 1178 | 1186 | 1198 | 1197 |
| $10^{2.5}$ dPa·s [°C] | N.A. | N.A. | N.A. | N.A. | N.A. | N.A. |
| Hydrolytic resistance test [μg/g] | 55.2 | 57.0 | 54.9 | 54.7 | 53.1 | 55.2 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | N.A. | N.A. | N.A. |
| log η at TL [dPa·s] | N.A. | N.A. | N.A. | N.A. | N.A. | N.A. |
| Linear thermal expansion coefficient (20°C to 300°C) | N.A. | N.A. | N.A. | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 7

| [mol%] | No. 73 | No. 74 | No. 75 | No. 76 | No. 77 | No. 78 |
|---|---|---|---|---|---|---|
| $SiO_2$ | 75.7 | 77.2 | 78.7 | 75.2 | 75.8 | 76.3 |
| $Al_2O_3$ | 7.0 | 5.5 | 4.0 | 6.5 | 9.1 | 8.6 |
| $B_2O_3$ | 0.1 | 0.1 | 0.1 | 0.1 | 0.1 | 0.1 |
| $Li_2O$ | 6.1 | 6.1 | 6.1 | 6.1 | 6.1 | 6.1 |
| $Na_2O$ | 5.9 | 5.9 | 5.9 | 5.8 | 5.8 | 5.8 |
| $K_2O$ | 1.9 | 1.9 | 1.9 | 1.9 | 2.5 | 2.5 |
| $MgO$ | 0.0 | 0.0 | 0.0 | 0.0 | 0.0 | 0.0 |
| $CaO$ | 2.6 | 2.6 | 2.6 | 3.7 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.11 | 0.12 | 0.12 | 0.12 | 0.04 | 0.04 |
| $Fe_2O_3$ | 0.005 | 0.005 | 0.005 | 0.005 | 0.004 | 0.004 |
| $TiO_2$ | 0.010 | 0.010 | 0.010 | 0.010 | 0.011 | 0.011 |
| $MoO_3$ | 0.0006 | 0.0006 | 0.0006 | 0.0006 | 0.0004 | 0.0004 |
| $Cl$ | 0.014 | 0.014 | 0.014 | 0.014 | 0.020 | 0.020 |
| $Li_2O+Na_2O+K_2O$ (=$R_2O$) | 13.9 | 13.9 | 13.9 | 13.8 | 14.4 | 14.4 |
| $MgO+CaO+SrO+BaO$ (=$R'O$) | 2.6 | 2.6 | 2.6 | 3.7 | 0.0 | 0.0 |
| $SnO_2+Fe_2O_3+TiO_2+MoO_3$ | 0.13 | 0.14 | 0.14 | 0.14 | 0.06 | 0.06 |
| $R_2O/Al_2O_3$ | 1.986 | 2.527 | 3.475 | 2.123 | 1.582 | 1.674 |
| $R_2O/(5-K_2O)$ | 4.484 | 4.484 | 4.484 | 4.452 | 5.760 | 5.760 |
| $R_2O/(1-K_2O)$ | -15.444 | -15.444 | -15.444 | -15.333 | -9.600 | -9.600 |
| $R'O/(1-CaO)$ | -1.625 | -1.625 | -1.625 | -1.370 | 0.000 | 0.000 |
| $(K_2O+CaO)/R_2O$ | 0.324 | 0.324 | 0.324 | 0.406 | 0.174 | 0.174 |
| $MoO_3/(Fe_2O_3+TiO_2)$ | 0.0400 | 0.0400 | 0.0400 | 0.0400 | 0.0267 | 0.0267 |
| $10SnO_2/(10Fe_2O_3+TiO_2+10SnO_2+100MoO_3)$ | 0.90 | 0.91 | 0.91 | 0.91 | 0.81 | 0.81 |

(continued)

| [mol%] | No. 73 | No. 74 | No. 75 | No. 76 | No. 77 | No. 78 |
|---|---|---|---|---|---|---|
| $(R_2O+R'O-Al_2O_3)/(SiO_2+Al_2O_3+B_2O_3)$ | 0.115 | 0.133 | 0.151 | 0.134 | 0.062 | 0.068 |
| $((R_2O/(1-K_2O))+(R'O/(1-CaO))-Al_2O_3)/(SiO_2+Al_2O_3+B_2O_3)$ | -0.291 | -0.273 | -0.254 | -0.284 | -0.220 | -0.214 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | 485 | 496 | 490 |
| Ta [°C] | N.A. | N.A. | N.A. | 528 | 545 | 538 |
| Ts [°C] | N.A. | N.A. | N.A. | 753 | 806 | 795 |
| Working temperature ($10^{4.0}$ dPa·s) [°C] | N.A. | N.A. | N.A. | 1159 | 1272 | 1259 |
| $10^{2.5}$ dPa·s [°C] | N.A. | N.A. | N.A. | N.A. | N.A. | N.A. |
| Hydrolytic resistance test [$\mu$g/g] | 57.8 | 69.8 | 102.9 | 63.9 | 36.9 | 35.3 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | 47 | N.A. | 55 |
| Liquidus temperature [°C] | N.A. | N.A. | N.A. | N.A. | N.A. | N.A. |
| log $\eta$ at TL [dPa·s] | N.A. | N.A. | N.A. | 5.5 | 6.8 | 6.9 |
| Linear thermal expansion coefficient (20°C to 300°C) | N.A. | N.A. | N.A. | 72.2 | 70.6 | 70.9 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 7 (Continued)

| [mol%] | No. 79 | No. 80 | No. 81 | No. 82 | No. 83 | No. 84 |
|---|---|---|---|---|---|---|
| $SiO_2$ | 74.9 | 75.5 | 75.9 | 75.4 | 74.7 | 75.9 |
| $Al_2O_3$ | 9.1 | 8.5 | 8.5 | 8.5 | 8.6 | 8.7 |
| $B_2O_3$ | 0.1 | 0.1 | 0.1 | 0.1 | 0.1 | 0.1 |
| $Li_2O$ | 6.1 | 6.1 | 6.1 | 6.1 | 6.1 | 6.1 |
| $Na_2O$ | 5.8 | 5.8 | 5.8 | 5.8 | 5.8 | 5.8 |
| $K_2O$ | 3.4 | 3.4 | 2.5 | 2.5 | 2.5 | 2.7 |
| $MgO$ | 0.0 | 0.0 | 0.0 | 0.0 | 0.0 | 0.0 |
| $CaO$ | 0.0 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 1.0 | 1.5 | 2.0 | 0.5 |
| $SnO_2$ | 0.03 | 0.04 | 0.04 | 0.04 | 0.09 | 0.08 |
| $Fe_2O_3$ | 0.004 | 0.004 | 0.004 | 0.004 | 0.004 | 0.005 |
| $TiO_2$ | 0.010 | 0.011 | 0.012 | 0.014 | 0.015 | 0.011 |
| $MoO_3$ | 0.0004 | 0.0004 | 0.0002 | 0.0002 | 0.0002 | 0.0002 |
| $Cl$ | 0.018 | 0.020 | 0.020 | 0.020 | 0.020 | 0.020 |
| $Li_2O+Na_2O+K_2O$ (=$R_2O$) | 15.3 | 15.3 | 14.4 | 14.4 | 14.4 | 14.6 |
| $MgO+CaO+SrO+BaO$ (=$R'O$) | 0.0 | 0.0 | 0.0 | 0.0 | 0.0 | 0.0 |
| $SnO_2+Fe_2O_3+TiO_2+MoO_3$ | 0.04 | 0.06 | 0.06 | 0.06 | 0.11 | 0.10 |
| $R_2O/Al_2O_3$ | 1.681 | 1.800 | 1.694 | 1.694 | 1.674 | 1.678 |
| $R_2O/(5-K_2O)$ | 9.563 | 9.563 | 5.760 | 5.760 | 5.760 | 6.348 |
| $R_2O/(1-K_2O)$ | -6.375 | -6.375 | -9.600 | -9.600 | -9.600 | -8.588 |
| $R'O/(1-CaO)$ | 0.000 | 0.000 | 0.000 | 0.000 | 0.000 | 0.000 |
| $(K_2O+CaO)/R_2O$ | 0.222 | 0.222 | 0.174 | 0.174 | 0.174 | 0.185 |
| $MoO_3/(Fe_2O_3+TiO_2)$ | 0.0286 | 0.0267 | 0.0125 | 0.0111 | 0.0105 | 0.0125 |
| $10SnO_2/(10Fe_2O_3+TiO_2+10SnO_2+100MoO_3)$ | 0.77 | 0.81 | 0.85 | 0.84 | 0.92 | 0.91 |

| [mol%] | No. 79 | No. 80 | No. 81 | No. 82 | No. 83 | No. 84 |
|---|---|---|---|---|---|---|
| $(R_2O+R'O-Al_2O_3)/(SiO_2+Al_2O_3+B_2O_3)$ | 0.074 | 0.081 | 0.070 | 0.070 | 0.070 | 0.070 |
| $((R_2O/(1-K_2O))+(R'O/(1-CaO))-Al_2O_3)/(SiO_2+Al_2O_3+B_2O_3)$ | -0.184 | -0.177 | -0.214 | -0.215 | -0.218 | -0.204 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | 485 | 481 | 500 | 511 | 522 | 488 |
| Ta [°C] | 533 | 533 | 549 | 560 | 572 | 536 |
| Ts [°C] | 784 | 777 | 808 | 822 | 836 | 792 |
| Working temperature ($10^{4.0}$ dPa·s) [°C] | 1243 | 1230 | 1267 | 1269 | 1276 | 1253 |
| $10^{2.5}$ dPa·s [°C] | N.A. | N.A. | N.A. | N.A. | N.A. | N.A. |
| Hydrolytic resistance test [μg/g] | 37.8 | 39.1 | 37.8 | 40.0 | 41.9 | 37.5 |
| Acid resistance test (YBB00342004) [mg/dm²] | N.A. | N.A. | N.A. | N.A. | N.A. | N.A. |
| Alkali resistance test (ISO 695) [mg/dm²] | N.A. | N.A. | 42 | 37 | 35 | 49 |
| Liquidus temperature [°C] | N.A. | N.A. | N.A. | N.A. | N.A. | 804 |
| log η at TL [dPa·s] | N.A. | N.A. | 7.4 | 7.1 | 7.3 | 7.5 |
| Linear thermal expansion coefficient (20°C to 300°C) | 75.6 | 75.4 | 70.4 | 70.2 | 70.0 | 72.0 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

EP 4 644 343 A1

Table 8

| [mol%] | No. 85 | No. 86 | No. 87 | No. 88 | No. 89 | No. 90 |
|---|---|---|---|---|---|---|
| $SiO_2$ | 73.8 | 73.8 | 73.8 | 75.8 | 75.8 | 77.8 |
| $Al_2O_3$ | 7.2 | 7.2 | 7.2 | 7.2 | 7.2 | 7.2 |
| $B_2O_3$ | 0.1 | 0.1 | 0.1 | 0.1 | 0.1 | 0.1 |
| $Li_2O$ | 8.1 | 6.1 | 4.1 | 6.1 | 4.1 | 6.1 |
| $Na_2O$ | 3.8 | 5.8 | 7.8 | 3.8 | 5.8 | 1.8 |
| $K_2O$ | 2.7 | 2.7 | 2.7 | 2.7 | 2.7 | 2.7 |
| $MgO$ | 0.0 | 0.0 | 0.0 | 0.0 | 0.0 | 0.0 |
| $CaO$ | 3.7 | 3.7 | 3.7 | 3.7 | 3.7 | 3.7 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.04 | 0.04 | 0.04 | 0.03 | 0.03 | 0.04 |
| $Fe_2O_3$ | 0.005 | 0.005 | 0.005 | 0.005 | 0.006 | 0.006 |
| $TiO_2$ | 0.010 | 0.010 | 0.010 | 0.010 | 0.011 | 0.011 |
| $MoO_3$ | 0.0001 | 0.0001 | 0.0001 | 0.0001 | 0.0005 | 0.0005 |
| $Cl$ | 0.014 | 0.019 | 0.025 | 0.014 | 0.018 | 0.007 |
| $Li_2O+Na_2O+K_2O$ (=$R_2O$) | 14.6 | 14.6 | 14.6 | 12.6 | 12.6 | 10.6 |
| $MgO+CaO+SrO+BaO$ (=$R'O$) | 3.7 | 3.7 | 3.7 | 3.7 | 3.7 | 3.7 |
| $SnO_2+Fe_2O_3+TiO_2+MoO_3$ | 0.06 | 0.06 | 0.06 | 0.05 | 0.05 | 0.06 |
| $R_2O/Al_2O_3$ | 2.028 | 2.028 | 2.028 | 1.750 | 1.750 | 1.472 |
| $R_2O/(5-K_2O)$ | 6.348 | 6.348 | 6.348 | 5.478 | 5.478 | 4.609 |
| $R_2O/(1-K_2O)$ | -8.588 | -8.588 | -8.588 | -7.412 | -7.412 | -6.235 |
| $R'O/(1-CaO)$ | -1.370 | -1.370 | -1.370 | -1.370 | -1.370 | -1.370 |
| $(K_2O+CaO)/R_2O$ | 0.438 | 0.438 | 0.438 | 0.508 | 0.508 | 0.604 |
| $MoO_3/(Fe_2O_3+TiO_2)$ | 0.0067 | 0.0067 | 0.0067 | 0.0067 | 0.0294 | 0.0294 |
| $10SnO_2/(10Fe_2O_3+TiO_2+10SnO_2+100MoO_3)$ | 0.85 | 0.85 | 0.85 | 0.81 | 0.71 | 0.77 |

(continued)

| [mol%] | No. 85 | No. 86 | No. 87 | No. 88 | No. 89 | No. 90 |
|---|---|---|---|---|---|---|
| $(R_2O+R'O-Al_2O_3)/(SiO_2+Al_2O_3+B_2O_3)$ | 0.137 | 0.137 | 0.137 | 0.110 | 0.110 | 0.083 |
| $((R_2O/(1-K_2O))+(R'O/(1-CaO))-Al_2O_3)/(SiO_2+Al_2O_3+B_2O_3)$ | -0.212 | -0.212 | -0.212 | -0.192 | -0.192 | -0.174 |
| Transparency | Transparent | Transparent | Transparent | Transparent | Transparent | Transparent |
| Transmittance [%] | 480 | 483 | 489 | 501 | 508 | 528 |
| Ps [°C] | 523 | 526 | 533 | 547 | 553 | 576 |
| Ta [°C] | 744 | 748 | 757 | 786 | 796 | 833 |
| Ts [°C] | 1141 | 1153 | 1166 | 1211 | 1225 | 1283 |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | 62.0 | 63.9 | 68.8 | 43.4 | 47.7 | 32.6 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | 919 | 914 | 925 | 964 | 982 | 982 |
| log $\eta$ at TL [dPa·s] | 5.6 | 5.7 | 5.7 | 5.7 | 5.6 | 6.0 |
| Linear thermal expansion coefficient (20°C to 300°C) | 72.4 | 76.1 | 79.3 | 67.7 | 71.6 | 58.0 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 8 (Continued)

| [mol%] | No. 91 | No. 92 | No. 93 | No. 94 | No. 95 | No. 96 |
|---|---|---|---|---|---|---|
| $SiO_2$ | 77.7 | 77.8 | 76.8 | 76.7 | 76.8 | 76.7 |
| $Al_2O_3$ | 7.2 | 7.2 | 7.2 | 7.2 | 7.2 | 7.3 |
| $B_2O_3$ | 0.1 | 0.1 | 0.1 | 0.1 | 0.1 | 0.1 |
| $Li_2O$ | 4.1 | 2.1 | 3.1 | 4.1 | 4.6 | 5.1 |
| $Na_2O$ | 3.8 | 5.8 | 5.7 | 4.8 | 4.3 | 3.8 |
| $K_2O$ | 2.7 | 2.7 | 2.7 | 2.7 | 2.7 | 2.7 |
| $MgO$ | 0.0 | 0.0 | 0.0 | 0.0 | 0.0 | 0.0 |
| $CaO$ | 3.7 | 3.6 | 3.7 | 3.7 | 3.7 | 3.7 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.13 | 0.12 | 0.14 | 0.13 | 0.04 | 0.04 |
| $Fe_2O_3$ | 0.006 | 0.006 | 0.006 | 0.006 | 0.006 | 0.006 |
| $TiO_2$ | 0.010 | 0.011 | 0.011 | 0.011 | 0.011 | 0.011 |
| $MoO_3$ | 0.0005 | 0.0005 | 0.0007 | 0.0007 | 0.0007 | 0.0007 |
| $Cl$ | 0.013 | 0.018 | 0.018 | 0.016 | 0.016 | 0.014 |
| $Li_2O+Na_2O+K_2O$ ($=R_2O$) | 10.6 | 10.6 | 11.5 | 11.6 | 11.6 | 11.6 |
| $MgO+CaO+SrO+BaO$ ($=R'O$) | 3.7 | 3.6 | 3.7 | 3.7 | 3.7 | 3.7 |
| $SnO_2+Fe_2O_3+TiO_2+MoO_3$ | 0.15 | 0.14 | 0.16 | 0.15 | 0.06 | 0.06 |
| $R_2O/Al_2O_3$ | 1.472 | 1.472 | 1.597 | 1.611 | 1.611 | 1.589 |
| $R_2O/(5-K_2O)$ | 4.609 | 4.609 | 5.000 | 5.043 | 5.043 | 5.043 |
| $R_2O/(1-K_2O)$ | -6.235 | -6.235 | -6.765 | -6.824 | -6.824 | -6.824 |
| $R'O/(1-CaO)$ | -1.370 | -1.385 | -1.370 | -1.370 | -1.370 | -1.370 |
| $(K_2O+CaO)/R_2O$ | 0.604 | 0.594 | 0.557 | 0.552 | 0.552 | 0.552 |
| $MoO_3/(Fe_2O_3+TiO_2)$ | 0.0313 | 0.0294 | 0.0412 | 0.0412 | 0.0412 | 0.0412 |
| $10SnO_2/(10Fe_2O_3+TiO_2+10SnO_2+100MoO_3)$ | 0.92 | 0.91 | 0.91 | 0.90 | 0.74 | 0.74 |

(continued)

| [mol%] | No. 91 | No. 92 | No. 93 | No. 94 | No. 95 | No. 96 |
|---|---|---|---|---|---|---|
| $(R_2O+R'O-Al_2O_3)/(SiO_2+Al_2O_3+B_2O_3)$ | 0.084 | 0.082 | 0.095 | 0.096 | 0.096 | 0.095 |
| $((R_2O/(1-K_2O))+(R'O/(1-CaO))-Al_2O_3)/(SiO_2+Al_2O_3+B_2O_3)$ | -0.174 | -0.174 | -0.182 | -0.183 | -0.183 | -0.184 |
| Transparency | Transparent | Transparent | Transparent | Transparent | Transparent | Transparent |
| Transmittance [%] | 533 | 546 | 524 | 518 | 517 | 515 |
| Ps [°C] | 583 | 597 | 572 | 566 | 564 | 562 |
| Ta [°C] | 845 | 863 | 828 | 820 | 817 | 814 |
| Ts [°C] | 1300 | 1321 | 1273 | 1264 | 1260 | 1258 |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [$\mu$g/g] | 31.3 | 35.3 | 41.2 | 41.2 | 41.2 | 41.5 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | 1025 | 1046 | 1020 | 999 | 1017 | 995 |
| log $\eta$ at TL [dPa·s] | 5.8 | 5.7 | 5.6 | 5.7 | 5.5 | 5.7 |
| Linear thermal expansion coefficient (20°C to 300°C) | 62.6 | 66.6 | 68.9 | 67.0 | 66.1 | 65.0 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 9

| [mol%] | No. 97 | No. 98 | No. 99 | No. 100 | No. 101 | No. 102 |
|---|---|---|---|---|---|---|
| $SiO_2$ | 76.7 | 76.6 | 75.8 | 75.6 | 76.9 | 78.4 |
| $Al_2O_3$ | 7.2 | 7.3 | 7.2 | 7.3 | 6.0 | 5.5 |
| $B_2O_3$ | 0.1 | 0.1 | 0.1 | 0.1 | 0.1 | 0.1 |
| $Li_2O$ | 6.1 | 7.1 | 5.1 | 7.1 | 8.1 | 7.1 |
| $Na_2O$ | 2.9 | 1.9 | 4.8 | 2.9 | 1.9 | 1.9 |
| $K_2O$ | 2.7 | 2.7 | 2.7 | 2.7 | 2.7 | 2.7 |
| $MgO$ | 0.0 | 0.0 | 0.0 | 0.0 | 0.0 | 0.0 |
| $CaO$ | 3.7 | 3.7 | 3.7 | 3.7 | 3.6 | 3.6 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.03 | 0.03 | 0.04 | 0.04 | 0.11 | 0.10 |
| $Fe_2O_3$ | 0.005 | 0.005 | 0.005 | 0.005 | 0.005 | 0.005 |
| $TiO_2$ | 0.010 | 0.010 | 0.010 | 0.010 | 0.010 | 0.010 |
| $MoO_3$ | 0.0004 | 0.0004 | 0.0004 | 0.0004 | 0.0001 | 0.0001 |
| $Cl$ | 0.011 | 0.009 | 0.016 | 0.011 | 0.011 | 0.011 |
| $Li_2O+Na_2O+K_2O$ (=$R_2O$) | 11.7 | 11.7 | 12.6 | 12.7 | 12.7 | 11.7 |
| $MgO+CaO+SrO+BaO$ (=$R'O$) | 3.7 | 3.7 | 3.7 | 3.7 | 3.6 | 3.6 |
| $SnO_2+Fe_2O_3+TiO_2+MoO_3$ | 0.05 | 0.05 | 0.06 | 0.06 | 0.13 | 0.12 |
| $R_2O/Al_2O_3$ | 1.625 | 1.603 | 1.750 | 1.740 | 2.117 | 2.127 |
| $R_2O/(5-K_2O)$ | 5.087 | 5.087 | 5.478 | 5.522 | 5.522 | 5.087 |
| $R_2O/(1-K_2O)$ | -6.882 | -6.882 | -7.412 | -7.471 | -7.471 | -6.882 |
| $R'O/(1-CaO)$ | -1.370 | -1.370 | -1.370 | -1.370 | -1.385 | -1.385 |
| $(K_2O+CaO)/R_2O$ | 0.547 | 0.547 | 0.508 | 0.504 | 0.496 | 0.538 |
| $MoO_3/(Fe_2O_3+TiO_2)$ | 0.0267 | 0.0267 | 0.0267 | 0.0267 | 0.0067 | 0.0067 |
| $10SnO_2/(10Fe_2O_3+TiO_2+10SnO_2+100MoO_3)$ | 0.75 | 0.75 | 0.80 | 0.80 | 0.94 | 0.93 |

(continued)

| [mol%] | No. 97 | No. 98 | No. 99 | No. 100 | No. 101 | No. 102 |
|---|---|---|---|---|---|---|
| $(R_2O+R'O-Al_2O_3)/(SiO_2+Al_2O_3+B_2O_3)$ | 0.098 | 0.096 | 0.110 | 0.110 | 0.124 | 0.117 |
| $((R_2O/(1-K_2O))+(R'O/(1-CaO))-Al_2O_3)/(SiO_2+Al_2O_3+B_2O_3)$ | -0.184 | -0.185 | -0.192 | -0.194 | -0.179 | -0.164 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | 513 | 512 | 503 | 500 | N.A. | N.A. |
| Ta [°C] | 560 | 559 | 549 | 545 | N.A. | N.A. |
| Ts [°C] | 810 | 807 | 790 | 784 | N.A. | N.A. |
| Working temperature ($10^{4.0}$ dPa·s) [°C] | 1248 | 1241 | 1223 | 1207 | N.A. | N.A. |
| $10^{2.5}$ dPa·s [°C] | N.A. | N.A. | N.A. | N.A. | N.A. | N.A. |
| Hydrolytic resistance test [μg/g] | 40.6 | 40.7 | 47.1 | 45.0 | 47.1 | 43.4 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | 990 | 960 | 995 | 955 | N.A. | N.A. |
| log η at TL [dPa·s] | 5.7 | 5.9 | 5.5 | 5.7 | N.A. | N.A. |
| Linear thermal expansion coefficient (20°C to 300°C) | 62.9 | 60.6 | 69.4 | 65.2 | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 9 (Continued)

| [mol%] | No. 103 | No. 104 | No. 105 | No. 106 | No. 107 | No. 108 |
|---|---|---|---|---|---|---|
| $SiO_2$ | 79.9 | 77.5 | 78.2 | 79.0 | 79.7 | 78.5 |
| $Al_2O_3$ | 5.0 | 7.0 | 6.8 | 6.5 | 6.3 | 6.0 |
| $B_2O_3$ | 0.1 | 0.1 | 0.1 | 0.1 | 0.1 | 0.1 |
| $Li_2O$ | 6.1 | 6.1 | 6.1 | 6.1 | 6.1 | 6.1 |
| $Na_2O$ | 1.9 | 5.9 | 5.4 | 4.9 | 4.4 | 5.9 |
| $K_2O$ | 2.7 | 2.7 | 2.7 | 2.7 | 2.7 | 2.7 |
| $MgO$ | 0.0 | 0.0 | 0.0 | 0.0 | 0.0 | 0.0 |
| $CaO$ | 3.6 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.11 | 0.12 | 0.09 | 0.08 | 0.09 | 0.10 |
| $Fe_2O_3$ | 0.005 | 0.004 | 0.004 | 0.004 | 0.005 | 0.005 |
| $TiO_2$ | 0.010 | 0.011 | 0.011 | 0.011 | 0.011 | 0.011 |
| $MoO_3$ | 0.0001 | 0.0001 | 0.0002 | 0.0002 | 0.0002 | 0.0002 |
| $Cl$ | 0.011 | 0.018 | 0.018 | 0.016 | 0.016 | 0.019 |
| $Li_2O+Na_2O+K_2O$ (=$R_2O$) | 10.7 | 14.7 | 14.2 | 13.7 | 13.2 | 14.7 |
| $MgO+CaO+SrO+BaO$ (=R'O) | 3.6 | 0.0 | 0.0 | 0.0 | 0.0 | 0.0 |
| $SnO_2+Fe_2O_3+TiO_2+MoO_3$ | 0.13 | 0.14 | 0.11 | 0.10 | 0.11 | 0.12 |
| $R_2O/Al_2O_3$ | 2.140 | 2.100 | 2.088 | 2.108 | 2.095 | 2.450 |
| $R_2O/(5-K_2O)$ | 4.652 | 6.391 | 6.174 | 5.957 | 5.739 | 6.391 |
| $R_2O/(1-K_2O)$ | -6.294 | -8.647 | -8.353 | -8.059 | -7.765 | -8.647 |
| $R'O/(1-CaO)$ | -1.385 | 0.000 | 0.000 | 0.000 | 0.000 | 0.000 |
| $(K_2O+CaO)/R_2O$ | 0.589 | 0.184 | 0.190 | 0.197 | 0.205 | 0.184 |
| $MoO_3/(Fe_2O_3+TiO_2)$ | 0.0067 | 0.0067 | 0.0133 | 0.0133 | 0.0125 | 0.0125 |
| $10SnO_2/(10Fe_2O_3+TiO_2+10SnO_2+100MoO_3)$ | 0.94 | 0.95 | 0.93 | 0.92 | 0.92 | 0.93 |

(continued)

| [mol%] | No. 103 | No. 104 | No. 105 | No. 106 | No. 107 | No. 108 |
|---|---|---|---|---|---|---|
| $(R_2O+R'O-Al_2O_3)/(SiO_2+Al_2O_3+B_2O_3)$ | 0.109 | 0.091 | 0.087 | 0.084 | 0.080 | 0.103 |
| $((R_2O/(1-K_2O))+(R'O/(1-CaO))-Al_2O_3)/(SiO_2+Al_2O_3+B_2O_3)$ | -0.149 | -0.185 | -0.178 | -0.170 | -0.163 | -0.173 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | 477 | 478 | 481 | 485 | 469 |
| Ta [°C] | N.A. | 525 | 527 | 530 | 534 | 517 |
| Ts [°C] | N.A. | 775 | 780 | 787 | 797 | 763 |
| Working temperature ($10^{4.0}$ dPa·s) [°C] | 1258 | 1223 | 1230 | 1246 | 1257 | 1206 |
| $10^{2.5}$ dPa·s [°C] | N.A. | N.A. | N.A. | N.A. | N.A. | N.A. |
| Hydrolytic resistance test [μg/g] | 38.4 | 37.8 | 36.3 | 34.4 | 32.9 | 42.8 |
| Acid resistance test (YBB00342004) [mg/dm$^2$] | N.A. | N.A. | N.A. | N.A. | N.A. | N.A. |
| Alkali resistance test (ISO 695) [mg/dm$^2$] | N.A. | N.A. | N.A. | N.A. | N.A. | N.A. |
| Liquidus temperature [°C] | N.A. | N.A. | N.A. | 800 | 846 | N.A. |
| log η at TL [dPa·s] | N.A. | N.A. | N.A. | 7.4 | 7.0 | N.A. |
| Linear thermal expansion coefficient (20°C to 300°C) | N.A. | 70.5 | 69.2 | 66.7 | 64.5 | 70.6 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Table 10

| [mol%] | No. 109 | No. 110 | No. 111 | No. 112 | No. 113 | No. 114 |
|---|---|---|---|---|---|---|
| $SiO_2$ | 79.1 | 79.9 | 80.9 | 81.4 | 82.2 | 79.0 |
| $Al_2O_3$ | 5.8 | 5.5 | 5.3 | 5.0 | 4.8 | 5.3 |
| $B_2O_3$ | 0.1 | 0.1 | 0.1 | 0.1 | 0.1 | 0.1 |
| $Li_2O$ | 6.1 | 6.1 | 6.1 | 6.1 | 6.1 | 4.8 |
| $Na_2O$ | 5.5 | 4.9 | 4.3 | 4.1 | 3.5 | 2.7 |
| $K_2O$ | 2.7 | 2.7 | 2.7 | 2.7 | 2.7 | 3.9 |
| $MgO$ | 0.0 | 0.0 | 0.0 | 0.0 | 0.0 | 0.0 |
| $CaO$ | 0.0 | 0.0 | 0.0 | 0.0 | 0.0 | 3.6 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.5 | 0.5 | 0.5 |
| $SnO_2$ | 0.13 | 0.21 | 0.04 | 0.04 | 0.03 | 0.03 |
| $Fe_2O_3$ | 0.005 | 0.004 | 0.005 | 0.005 | 0.005 | 0.005 |
| $TiO_2$ | 0.011 | 0.011 | 0.011 | 0.012 | 0.012 | 0.011 |
| $MoO_3$ | 0.0003 | 0.0003 | 0.0003 | 0.0003 | 0.0007 | 0.0007 |
| $Cl$ | 0.018 | 0.016 | 0.014 | 0.007 | 0.005 | 0.005 |
| $Li_2O+Na_2O+K_2O$ (=$R_2O$) | 14.3 | 13.7 | 13.1 | 12.9 | 12.3 | 11.4 |
| $MgO+CaO+SrO+BaO$ (=$R'O$) | 0.0 | 0.0 | 0.0 | 0.0 | 0.0 | 3.6 |
| $SnO_2+Fe_2O_3+TiO_2+MoO_3$ | 0.15 | 0.23 | 0.06 | 0.06 | 0.05 | 0.05 |
| $R_2O/Al_2O_3$ | 2.466 | 2.491 | 2.472 | 2.580 | 2.563 | 2.151 |
| $R_2O/(5-K_2O)$ | 6.217 | 5.957 | 5.696 | 5.609 | 5.348 | 10.364 |
| $R_2O/(1-K_2O)$ | -8.412 | -8.059 | -7.706 | -7.588 | -7.235 | -3.931 |
| $R'O/(1-CaO)$ | 0.000 | 0.000 | 0.000 | 0.000 | 0.000 | -1.385 |
| $(K_2O+CaO)/R_2O$ | 0.189 | 0.197 | 0.206 | 0.209 | 0.220 | 0.658 |
| $MoO_3/(Fe_2O_3+TiO_2)$ | 0.0188 | 0.0200 | 0.0188 | 0.0176 | 0.0412 | 0.0438 |
| $10SnO_2/(10Fe_2O_3+TiO_2+10SnO_2+100MoO_3)$ | 0.93 | 0.96 | 0.81 | 0.81 | 0.69 | 0.70 |

(continued)

| [mol%] | No. 109 | No. 110 | No. 111 | No. 112 | No. 113 | No. 114 |
|---|---|---|---|---|---|---|
| $(R_2O+R'O-Al_2O_3)/(SiO_2+Al_2O_3+B_2O_3)$ | 0.100 | 0.096 | 0.090 | 0.091 | 0.086 | 0.115 |
| $((R_2O/(1-K_2O))+(R'O/(1-CaO))-Al_2O_3)/(SiO_2+Al_2O_3+B_2O_3)$ | -0.167 | -0.159 | -0.151 | -0.146 | -0.138 | -0.126 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | 470 | 472 | 478 | 477 | 482 | 510 |
| Ta [°C] | 518 | 521 | 527 | 527 | 533 | 557 |
| Ts [°C] | 767 | 773 | 788 | 788 | 801 | 812 |
| Working temperature ($10^{4.0}$ dPa·s) [°C] | 1210 | 1228 | 1240 | 1239 | 1257 | 1252 |
| $10^{2.5}$ dPa·s [°C] | N.A. | N.A. | N.A. | N.A. | N.A. | N.A. |
| Hydrolytic resistance test [$\mu$g/g] | 42.8 | 39.1 | 34.4 | 36.0 | 32.2 | 49.0 |
| Acid resistance test (YBB00342004) [mg/dm$^2$] | N.A. | 0.59 | N.A. | N.A. | N.A. | 0.26 |
| Alkali resistance test (ISO 695) [mg/dm$^2$] | N.A. | 54 | N.A. | N.A. | N.A. | 48 |
| Liquidus temperature [°C] | 843 | 887 | 977 | 1002 | N.A. | 986 |
| log $\eta$ at TL [dPa·s] | 6.7 | 6.3 | 5.7 | 5.5 | N.A. | 5.8 |
| Linear thermal expansion coefficient (20°C to 300°C) | 69.6 | 64.0 | 66.7 | 63.0 | 60.2 | 64.3 |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [$\mu$m] | N.A. | N.A. | N.A. | N.A. | N.A. | N.A. |

Table 10 (Continued)

| [mol%] | No. 115 | No. 116 | No. 117 | No. 118 | No. 119 | No. 120 |
|---|---|---|---|---|---|---|
| $SiO_2$ | 79.8 | 81.8 | 83.9 | 79.2 | 79.4 | 79.7 |
| $Al_2O_3$ | 5.0 | 4.0 | 3.5 | 6.5 | 6.5 | 6.5 |
| $B_2O_3$ | 0.1 | 0.1 | 0.1 | 0.0 | 0.0 | 0.0 |
| $Li_2O$ | 4.8 | 6.1 | 6.1 | 0.0 | 9.0 | 2.3 |
| $Na_2O$ | 2.7 | 4.7 | 3.1 | 6.8 | 2.3 | 9.0 |
| $K_2O$ | 3.6 | 2.7 | 2.7 | 6.8 | 2.3 | 2.3 |
| $MgO$ | 0.0 | 0.0 | 0.0 | 0.0 | 0.0 | 0.0 |
| $CaO$ | 3.4 | 0.0 | 0.0 | 0.0 | 0.0 | 0.0 |
| $SrO$ | 0.0 | 0.0 | 0.0 | 0.0 | 0.0 | 0.0 |
| $BaO$ | 0.0 | 0.0 | 0.0 | 0.0 | 0.0 | 0.0 |
| $ZrO_2$ | 0.5 | 0.5 | 0.5 | 0.0 | 0.0 | 0.0 |
| $SnO_2$ | 0.04 | 0.04 | 0.03 | 0.20 | 0.20 | 0.20 |
| $Fe_2O_3$ | 0.005 | 0.004 | 0.004 | 0.008 | 0.007 | 0.007 |
| $TiO_2$ | 0.011 | 0.012 | 0.011 | 0.500 | 0.300 | 0.100 |
| $MoO_3$ | 0.0007 | 0.0007 | 0.0007 | 0.00044 | 0.00200 | 0.00001 |
| $Cl$ | 0.005 | 0.007 | 0.005 | 0.004 | 0.004 | 0.004 |
| $Li_2O+Na_2O+K_2O$ (=$R_2O$) | 11.1 | 13.5 | 11.9 | 13.6 | 13.6 | 13.6 |
| $MgO+CaO+SrO+BaO$ (=R'O) | 3.4 | 0.0 | 0.0 | 0.0 | 0.0 | 0.0 |
| $SnO_2+Fe_2O_3+TiO_2+MoO_3$ | 0.06 | 0.06 | 0.05 | 0.71 | 0.51 | 0.31 |
| $R_2O/Al_2O_3$ | 2.220 | 3.376 | 3.400 | 2.092 | 2.092 | 2.092 |
| $R_2O/(5-K_2O)$ | 7.929 | 5.870 | 5.174 | -7.556 | 5.037 | 5.037 |
| $R_2O/(1-K_2O)$ | -4.269 | -7.941 | -7.000 | -2.345 | -10.462 | -10.462 |
| $R'O/(1-CaO)$ | -1.417 | 0.000 | 0.000 | 0.000 | 0.000 | 0.000 |
| $(K_2O+CaO)/R_2O$ | 0.631 | 0.200 | 0.227 | 0.500 | 0.169 | 0.169 |
| $MoO_3/(Fe_2O_3+TiO_2)$ | 0.0438 | 0.0438 | 0.0467 | 0.0338 | 0.1667 | 0.0008 |
| $10SnO_2/(10Fe_2O_3+TiO_2+10SnO_2+100MoO_3)$ | 0.75 | 0.77 | 0.71 | 0.94 | 0.88 | 0.96 |

| [mol%] | No. 115 | No. 116 | No. 117 | No. 118 | No. 119 | No. 120 |
|---|---|---|---|---|---|---|
| $(R_2O+R'O-Al_2O_3)/(SiO_2+Al_2O_3+B_2O_3)$ | 0.112 | 0.111 | 0.096 | 0.082 | 0.082 | 0.082 |
| $((R_2O/(1-K_2O))+(R'O/(1-CaO))-Al_2O_3)/(SiO_2+Al_2O_3+B_2O_3)$ | -0.126 | -0.139 | -0.120 | -0.103 | -0.197 | -0.197 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | 509 | 464 | 478 | N.A. | N.A. | N.A. |
| Ta [°C] | 557 | 513 | 529 | N.A. | N.A. | N.A. |
| Ts [°C] | 814 | 765 | 796 | N.A. | N.A. | N.A. |
| Working temperature ($10^{4.0}$ dPa·s) [°C] | 1261 | 1202 | 1247 | N.A. | N.A. | N.A. |
| $10^{2.5}$ dPa·s [°C] | N.A. | N.A. | N.A. | N.A. | N.A. | N.A. |
| Hydrolytic resistance test [μg/g] | 46.2 | 58.9 | 40.6 | N.A. | N.A. | N.A. |
| Acid resistance test (YBB00342004) [mg/dm$^2$] | 0.36 | 0.27 | N.A. | N.A. | N.A. | N.A. |
| Alkali resistance test (ISO 695) [mg/dm$^2$] | 47 | 52 | N.A. | N.A. | N.A. | N.A. |
| Liquidus temperature [°C] | 977 | N.A. | N.A. | N.A. | N.A. | N.A. |
| log η at TL [dPa·s] | 5.9 | N.A. | N.A. | N.A. | N.A. | N.A. |
| Linear thermal expansion coefficient (20°C to 300°C) | 62.6 | 65.9 | 58.3 | N.A. | N.A. | N.A. |
| Young's modulus [GPa] | N.A. | N.A. | N.A. | N.A. | N.A. | N.A. |
| CS [MPa] | N.A. | N.A. | N.A. | N.A. | N.A. | N.A. |
| DOL [μm] | N.A. | N.A. | N.A. | N.A. | N.A. | N.A. |

Each sample in the tables was prepared as follows. First, a 550 g batch was mixed to have the glass composition shown in the tables, and melted in a platinum crucible at 1600°C for 18 hours. Note that, in order to improve the homogeneity of the molten glass, stirring was carried out twice during the melting process. Further, in order to reduce bubbles in the glass, melting was performed at 1650°C for 2 hours. Next, the glass was quenched using a metal roller to prepare a sheet having a thickness of about 5 mm, which was then processed into a shape required for measurement and subjected to various evaluations. The results are shown in the tables.

The transparency was determined by visual observation of a sheet-shaped sample having a thickness of about 5 mm according to two levels: transparent and colored. Specifically, when characters were viewed through the sample, the sample was determined as transparent in the case where the characters were clearly visible, and as colored in the case where the characters were not clearly visible.

For the transmittance, the sample was processed into a sheet of 30 mm × 30 mm × 1 mm and the surface was mirror-finished to prepare a measurement sample. The measurement was performed using a spectrophotometer (V-670 manufactured by JASCO Corporation) with a measurement wavelength range of 380 nm to 760 nm, a bandwidth of 5 nm, a medium response, a scanning speed of 200 nm, and a data acquisition interval of 1 nm. In the tables, the smallest transmittance value in the wavelength range of 380 nm to 760 nm is shown.

The strain point Ps was determined by using a fiber drawing method according to ASTM C336. The annealing point Ta and the softening point Ts were determined by using a fiber drawing method according to ASTM C388.

The working temperature (the temperature at which the viscosity of the glass is $10^{4.0}$ dPa·s) and the temperature at which the viscosity of the glass is $10^{2.5}$ dPa·s were determined by using a platinum sphere pull up method.

The hydrolytic resistance test was performed using the hydrolytic resistance test (washing with acetone) according to ISO 720 and the alkali resistance test was performed according to ISO 695. Note that, the detailed test procedure is as described above.

The acid resistance test was performed using the acid resistance test according to YBB00342004, and the alkali resistance test was performed according to ISO 695.

The liquidus temperature was determined by filling a platinum boat of approximately 120 mm × 20 mm × 10 mm with a ground glass, charging it into an electric furnace having a linear temperature gradient for 24 hours, then identifying crystal precipitation sites by observation using a microscope, and determining the temperature corresponding to the crystal precipitation site from a temperature gradient graph of the electric furnace.

The liquidus viscosity log $\eta$ at TL was calculated by determining a viscosity curve of the glass based on the strain point Ps, the annealing point Ta, the softening point Ts, the working temperature, and the Fulcher viscosity formula, and then calculating the viscosity of the glass at the liquidus temperature from this viscosity curve.

The linear thermal expansion coefficient was measured using a glass sample formed into a rod shape of about 5 mm in diameter × 20 mm, in a temperature range of 20°C to 300°C with a dilatometer.

The Young's modulus is a value measured by using a well-known resonance method. Note that, although the Young's modulus on the surface layer of the glass is microscopically different before and after the ion exchange treatment, there is no substantial difference when the glass is viewed as a whole since the average value is measured by using the resonance method.

Further, both surfaces of the obtained sheet-shaped sample were optically polished to a thickness of 0.7 mm, and then the sheet was immersed in a $KNO_3$ molten salt at 430°C for 4 hours to carry out an ion exchange treatment. After the ion exchange treatment, the surface of each sample was washed. Subsequently, the compression stress value CS and the stress depth DOL on the outermost surface were calculated based on the number and interval of interference fringes observed using a surface stress meter (FSM-6000 manufactured by Orihara industrial co., ltd.). In the calculation, the refractive index of each sample was set to 1.50, and the optical elastic constant was set to 29.5 [(nm/cm)/MPa]. Note that, although the glass composition in the surface layer of the glass is microscopically different before and after the ion exchange treatment, there is no substantial difference in the glass composition when the glass is viewed as a whole.

As can be seen from the tables, Sample Nos. 1 to 120 each have a glass composition regulated within a predetermined range, and are therefore thought to achieve the chemical durability, the ion exchange performance, and the formability at a high level.

## Claims

1. A glass tube comprising, as a glass composition, in mol%, from 60% to 85% of $SiO_2$, from 1% to 20% of $Al_2O_3$, from 0% to 5% of $B_2O_3$, from 0% to 5% of MgO+CaO+SrO+BaO, and from 1% to 20% of $Li_2O+Na_2O+K_2O$.

2. The glass tube according to claim 1, wherein the content of $Al_2O_3$ is from 1 mol% to 10 mol%.

3. The glass tube according to claim 1 or 2, wherein a content of MgO is from 0 mol% to 1 mol%, and a content of CaO is from 0 mol% to 0.5 mol%.

4. The glass tube according to claim 1 or 2, wherein a content of $Li_2O$ is from 0 mol% to 10 mol%, a content of $Na_2O$ is from 0.1 mol% to 15 mol%, and a content of $K_2O$ is from 0 mol% to 5 mol%.

5. The glass tube according to claim 1 or 2, wherein a content of $SnO_2$ is from 0.03 mol% to 3 mol%.

6. The glass tube according to claim 1 or 2, wherein a content of $TiO_2$ is from 0.001 mol% to 0.5 mol%.

7. The glass tube according to claim 1 or 2, wherein a content of $Fe_2O_3+TiO_2+SnO_2+MoO_3$ is from 0.001 mol% to 1 mol%.

8. The glass tube according to claim 1 or 2, wherein a molar ratio $(Li_2O+Na_2O+K_2O)/Al_2O_3$ is 2 or more.

9. The glass tube according to claim 1 or 2, wherein a molar ratio $MoO_3/(Fe_2O_3+TiO_2$ 11. is 0.5 or less, and a visible light transmittance at a thickness of 1 mm is 80% or more.

10. The glass tube according to claim 1 or 2, wherein a molar ratio $(10\times SnO_2)/(10\times Fe_2O_3+TiO_2+10\times SnO_2+100\times MoO_3)$ is from 0.5 to 1, and a visible light transmittance at a thickness of 1 mm is 85% or more.

11. The glass tube according to claim 1 or 2, which is to be subjected to an ion exchange treatment.

12. The glass tube according to claim 1 or 2, which is for use in a pharmaceutical container.

13. A pharmaceutical container obtained by processing a glass tube, wherein
the glass tube is the glass tube according to claim 1 or 2.

14. The pharmaceutical container according to claim 12, comprising: a compression stress layer on a surface.

15. A glass tube comprising, as a glass composition, in mol%, from 66% to 85% of $SiO_2$, from 1% to 10% of $Al_2O_3$, from 0% to 5% of $B_2O_3$, from 1% to 16.5% of $Li_2O+Na_2O+K_2O$, from 0% to 5% of $MgO+CaO+SrO+BaO$, and from 0.03% to 3% of $SnO_2$, wherein a molar ratio $MoO_3/(Fe_2O_3+TiO_2)$ is from 0.0001 to 0.2, and a visible light transmittance at a thickness of 1 mm is 85% or more.

16. A glass tube comprising, as a glass composition, in mol%, from 66% to 85% of $SiO_2$, from 1% to 10% of $Al_2O_3$, from 0% to 5% of $B_2O_3$, from 1% to 16.5% of $Li_2O+Na_2O+K_2O$, from 0% to less than 4% of $MgO+CaO+SrO+BaO$, from 0.001% to 0.5% of $TiO_2$, and from 0.03% to 3% of $SnO_2$, wherein a molar ratio $(10\times SnO_2)/(10\times Fe_2O_3+TiO_2+10\times SnO_2+100\times MoO_3)$ is from 0.5 to 1, and a visible light transmittance at a thickness of 1 mm is 85% or more.

## INTERNATIONAL SEARCH REPORT

| International application No. |
|---|
| **PCT/JP2023/045952** |

| A. | CLASSIFICATION OF SUBJECT MATTER |
|---|---|

*C03C 3/091*(2006.01)i; *A61J 1/05*(2006.01)i; *C03C 3/083*(2006.01)i; *C03C 3/085*(2006.01)i; *C03C 21/00*(2006.01)i
FI:  C03C3/091; A61J1/05 311; C03C3/083; C03C3/085; C03C21/00 101

According to International Patent Classification (IPC) or to both national classification and IPC

| B. | FIELDS SEARCHED |
|---|---|

Minimum documentation searched (classification system followed by classification symbols)

C03C1/00-C03C14/00; C03C21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2017-36202 A (SCHOTT AG) 16 February 2017 (2017-02-16)<br>    paragraphs [0031]-[0033], [0059]-[0070] | 1-10, 12-13 |
| Y |  | 11, 14 |
| Y | JP 2015-61808 A (NIPPON ELECTRIC GLASS CO., LTD.) 02 April 2015 (2015-04-02)<br>    paragraphs [0096]-[0132] | 11, 14 |
| Y | JP 2017-218353 A (NIPPON ELECTRIC GLASS CO., LTD.) 14 December 2017<br>(2017-12-14)<br>    paragraphs [0059]-[0078] | 11, 14 |
| A | JP 2022-526269 A (CORNING INCORPORATED) 24 May 2022 (2022-05-24) | 1-16 |
| A | JP 2014-37343 A (NIPPON ELECTRIC GLASS CO., LTD.) 27 February 2014 (2014-02-27) | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2024** | **05 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2023/045952** |

**Box No. III      Observations where unity of invention is lacking (Continuation of item 3 of first sheet)**

This International Searching Authority found multiple inventions in this international application, as follows:

Document 1: JP 2017-36202 A (SCHOTT AG) 16 February 2017 (2017-02-16), paragraphs [0031]-[0033], [0059]-[0070] & US 2017/0029319 A1, paragraphs [0033]-[0035], [0061]-[0072] & EP 3124447 A1 & DE 102015214431 B3 & CN 106396371 A

The claims are classified into the following three inventions.

(Invention 1) Claims 1-14

Document 1 discloses, in working example A1, a glass tube having a composition of, in terms of % by mole, about 82.6% of $SiO_2$, about 4.1% of $B_2O_3$, about 4.6% of $Al_2O_3$, about 0.64% of $Li_2O$, about 3.2% of $Na_2O$, about 4.3% of $K_2O$ and about 0.56% of $TiO_2$. Claims 1-3 lack novelty in light of document 1, and thus do not have a special technical feature. Accordingly, claims 1-3 are classified as invention 1.

Claims 4-14 are dependent on claim 1 and inventively related to claim 1, and are thus classified as invention 1.

(Invention 2) Claim 15

Claim 15 cannot be said to share a same or corresponding special technical feature with claim 3 classified as invention 1. Moreover, claim 15 is not dependent on claim 1. Furthermore, claim 15 is not substantially identical to or similarly closely related to any of the claims classified as invention 1. Accordingly, claim 15 cannot be classified as invention 1.

Claim 15 has the special technical feature of a glass tube comprising prescribed amounts of $SiO_2$, $Al_2O_3$, $B_2O_3$, an alkali metal oxide and an alkaline earth metal oxide, wherein "$MoO_3/(Fe_2O_3+TiO_2)$ is 0.0001-0.2", and thus is classified as invention 2.

(Invention 3) Claim 16

Claim 16 cannot be said to share a same or corresponding special technical feature with claim 3 classified as invention 1 or claim 15 classified as invention 2. Moreover, claim 16 is not dependent on either claim 1 or 15. Furthermore, claim 16 is not substantially identical to or similarly closely related to any of the claims classified as either invention 1 or 2. Accordingly, claim 16 cannot be classified as either invention 1 or 2.

Claim 16 has the special technical feature of a glass tube comprising prescribed amounts of $SiO_2$, $Al_2O_3$, $B_2O_3$, an alkali metal oxide and an alkaline earth metal oxide, wherein "$(10\times SnO_2)/(10\times Fe_2O_3+TiO_2+10\times SnO_2+100\times MoO_3)$ is 0.5-1", and thus is classified as invention 3.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

EP 4 644 343 A1

### INTERNATIONAL SEARCH REPORT
#### Information on patent family members

| Patent document cited in search report | | | Publication date (day/month/year) | Patent family member(s) | | | Publication date (day/month/year) |
|---|---|---|---|---|---|---|---|
| JP | 2017-36202 | A | 16 February 2017 | US | 2017/0029319 | A1 | |
| | | | | paragraphs [0033]-[0035], [0061]-[0072] | | | |
| | | | | EP | 3124447 | A1 | |
| | | | | DE | 102015214431 | B3 | |
| | | | | CN | 106396371 | A | |
| JP | 2015-61808 | A | 02 April 2015 | US | 2015/0329406 | A1 | |
| | | | | paragraphs [0101]-[0129] | | | |
| | | | | WO | 2014/098111 | A1 | |
| | | | | TW | 201434779 | A | |
| | | | | KR | 10-2015-0013270 | A | |
| | | | | CN | 104619662 | A | |
| JP | 2017-218353 | A | 14 December 2017 | (Family: none) | | | |
| JP | 2022-526269 | A | 24 May 2022 | US | 2020/0290920 | A1 | |
| | | | | WO | 2020/190504 | A1 | |
| | | | | CN | 113597414 | A | |
| | | | | KR | 10-2021-0137527 | A | |
| | | | | TW | 202045448 | A | |
| | | | | CA | 3130390 | A1 | |
| JP | 2014-37343 | A | 27 February 2014 | US | 2015/0246846 | A1 | |
| | | | | WO | 2014/014003 | A1 | |
| | | | | EP | 2876092 | A1 | |
| | | | | CN | 104619660 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083045 A
- WO 2015031188 A

- WO 2013063275 A

**Non-patent literature cited in the description**

- **TETSURO IZUMITANI et al.** New Glass and its Physical Properties. Management System Laboratory. Co., Ltd., 20 August 1984, 451-498